# EUROPEAN PATENT APPLICATION

(11) **EP 4 589 374 A1**
(43) Date of publication of application: **23.07.2025**
(21) Application number: 23865396.8
(22) Date of filing: 07.09.2023
(51) Int. Cl.: G02F 1/1334, G02F 1/13

(54) **LIGHT CONTROL SHEET, LIGHT CONTROL DEVICE AND METHOD FOR PRODUCING LIGHT CONTROL SHEET**

(30) Priority: 14.09.2022 JP 2022145814; 24.03.2023 JP 2023047598
(71) Applicant: Toppan Holdings Inc., Tokyo 110-0016 (JP)
(72) Inventor: MORINAGA, Kaori, Tokyo 110-0016 (JP)
(74) Representative: TBK
(86) International application number: PCT/JP2023/032652
(87) International publication number: WO 2024/058041

(57) **Abstract**

A light control layer (31) includes an ionizing radiation-curable resin layer (31P) that defines voids (31D) and a liquid crystal composition (31LC) filled in the voids (31D). An acrylic compound having 3 or more functional groups, and having a double bond equivalent weight of 150 g/eq or less is a first acrylic compound. A monofunctional alkyl acrylate containing a saturated alkyl group is a second acrylic compound. An acrylic compound having 1 or more and 3 or less functional groups and a polyethylene oxide chain, and having a double bond equivalent weight of 300 g/eq or greater and 700 g/eq or less is a third acrylic compound is a third acrylic compound. A content of the first acrylic compound is 5 mass% or greater and 40 mass% or less. A content of the second acrylic compound is 55 mass% or greater and 80 mass% or less. A content of the third acrylic compound is 5 mass% or greater and 20 mass% or less. With this configuration, the light control sheet can be driven in a low-temperature environment.

## Description

### [Technical Field]

The present disclosure relates to a light control sheet in which voids defined by an ionizing radiation-curable resin layer are filled with a liquid crystal composition, a light control device having the light control sheet, and a method of producing the light control sheet.

### [Background Art]

A light control sheet includes a light control layer between transparent electrode films. The light control layer includes an ionizing radiation-curable resin layer that defines a plurality of voids and a liquid crystal composition filled in the voids. Changing a voltage between the transparent electrode films changes the alignment state of the liquid crystal compound contained in the liquid crystal composition. The change of the alignment state of the liquid crystal compound changes the degree of scattering at the interface between the ionizing radiation-curable resin layer and the liquid crystal composition to thereby change the degree of transparency of the light control sheet.

A mounting technique of the light control sheet requires the light control sheet to be heat resistant. In the interlayer film type mounting technique, glass substrates with the light control sheet sandwiched therebetween are heated for bonding. Transparent electrode films generate low molecular weight impurities in a high-temperature environment such as during bonding. Since the low molecular weight impurities diffused into the light control layer degrade the electric properties of the liquid crystal compound, a surface treatment layer of the transparent electrode films has a barrier function so that the low molecular weight impurities are prevented from contacting the liquid crystal compound (e.g., see PTL 1).

The time it takes for the degree of transparency of the light control sheet to respond to a change in voltage between the transparent electrode films depends on the environmental temperature where the light control sheet is installed. The lower the environmental temperature at which the degree of transparency of the light control sheet can respond to a change in voltage, the more suitable the application of the light control sheet is for low-temperature environments. A configuration example that lowers the temperature at which the light control sheet can be applied is to add a viscosity reducing agent to the liquid crystal composition to reduce the viscosity of the liquid crystal composition in low-temperature environments (e.g., see PTLs 2 and 3).

### [Citation List]

### [Patent Literature]

PTL 1: JP 6447757 B
PTL 2: JP 2022-148343 A
PTL 3: JP 2022-098845 A

### [Summary of Invention]

### [Technical Problem]

Expanding the temperature range that is limited to drive the light control layer leads to a wider range of applications for the light control sheets and development of the industries related to the light control sheets. The temperature that is limited to drive the light control layer may be (i) a mounting temperature of the light control sheet or (ii) an environmental temperature of the light control sheet.

(i) The mounting temperature of the light control sheet is limited as follows.

The use of flexible resin or glass substrates as the substrates of the transparent electrode film enables roll-to roll production of light control sheets. On the other hand, the use of substrates that are easily deformed in a high-temperature environment limits the conditions for forming a light control sheet to a low-temperature environment, avoiding a high temperature environment. When the alignment of the liquid crystal compound is required during the period when the voltage signal supply is stopped, such as in the reverse type light control sheet, the light control sheet includes alignment layers. The alignment layers that apply an alignment regulation force to the liquid crystal compound are disposed in contact with the light control layer, regardless of whether the surface treatment layer described above is provided. The alignment layers, whose formation conditions are limited to a low-temperature environment, contain unreacted substances such as polyamic acid and low molecular weight impurities such as residual solvents. As a result, in mounting techniques of the light control sheet which require heating, by-products generated from the unreacted substances and residual solvents diffuse into the light control layer from the alignment layers disposed in contact with the light control layer. Therefore, the mounting temperature of the light control sheet is limited.

(ii) The environmental temperature of the light control sheet is limited as follows.

The addition of a viscosity reducing agent reduces the content of the ionizing radiation-curable resin layer or the content of the liquid crystal compound in the light control layer. The reduction in the interface between the ionizing radiation-curable resin layer and the liquid crystal composition due to the decrease in content reduces the degree of scattering of the light control sheet, so there is a limit to the reduction in viscosity by the addition of a viscosity reducing agent. Therefore, the environmental temperature of the light control sheet is limited.

### [Solution to Problem]

A light control sheet for solving the above problem is a light control sheet including: a first transparent electrode layer; a second transparent electrode layer; and a light control layer located between the first transparent electrode layer and the second transparent electrode layer, the light control sheet being configured to change haze of the light control layer in response to a change in voltage applied between the first transparent electrode layer and the second transparent electrode layer. The light control layer includes an ionizing radiation-curable resin layer that defines voids and a liquid crystal composition filled in the voids, an acryloyl group and a methacryloyl group are functional groups, an acrylic compound having 3 or more of the functional groups and having a double bond equivalent weight of 150 g/eq or less, among acrylic compounds constituting the ionizing radiation-curable resin layer, is a first acrylic compound, and a content of the first acrylic compound constituting the ionizing radiation-curable resin layer is 2 mass% or greater of the ionizing radiation-curable resin layer.

A light control device for solving the above problem is a light control device including: a light control sheet; and a driving unit that applies a voltage to the light control sheet. The light control sheet includes: a first transparent electrode layer; a second transparent electrode layer; and a light control layer located between the first transparent electrode layer and the second transparent electrode layer, the light control sheet being configured to change haze of the light control layer in response to a change in voltage applied between the first transparent electrode layer and the second transparent electrode layer, wherein the light control layer includes an ionizing radiation-curable resin layer that defines voids and a liquid crystal composition filled in the voids, an acryloyl group and a methacryloyl group are functional groups, an acrylic compound having 3 or more of the functional groups and having a double bond equivalent weight of 150 g/eq or less, among acrylic compounds constituting the ionizing radiation-curable resin layer, is a first acrylic compound, and a content of the first acrylic compound constituting the ionizing radiation-curable resin layer is 2 mass% or greater of the ionizing radiation-curable resin layer.

A method of producing a light control sheet for solving the above problem is a method of producing a light control sheet, the method including: forming a coating layer containing an ionizing radiation-curable composition and a liquid crystal composition between a first transparent electrode layer and a second transparent electrode layer; and irradiating the coating layer with ionizing radiation to form a light control layer including an ionizing radiation-curable resin layer that defines voids and the liquid crystal composition filled in the voids between the first transparent electrode layer and the second transparent electrode layer, the light control sheet being configured to change haze of the light control layer in response to a change in voltage applied between the first transparent electrode layer and the second transparent electrode layer. An acryloyl group and a methacryloyl group are functional groups, an acrylic compound having 3 or more of the functional groups and having a double bond equivalent weight of 150 g/eq or less, among acrylic compounds constituting the ionizing radiation-curable resin layer, is a first acrylic compound, and a content of the first acrylic compound constituting the ionizing radiation-curable composition is 2 mass% or greater of the ionizing radiation-curable composition.

According to the above configurations, since the first acrylic compound having 3 or more functional groups and having a double bond equivalent weight of 150 g/eq or less, among acrylic compounds constituting the ionizing radiation-curable resin layer, is 2 mass% or greater of the ionizing radiation-curable resin layer, the ionizing radiation-curable resin layer prevents low molecular weight impurities contained in the alignment layer from reaching the liquid crystal compound. As a result, the heat resistance of the optical properties of the light control sheet can be improved.

### [Advantageous Effects of Invention]

A light control sheet, a light control device and a method of producing a light control sheet according to the present disclosure expand the temperature range limited for driving the light control sheet.

### [Brief Description of Drawings]

Fig. 1 is a configuration diagram of a light control device.
Fig. 2 is an enlarged cross-sectional view of a light control sheet.
Fig. 3 shows the acrylic compound content and the evaluation results in the test examples.
Fig. 4 shows the acrylic compound content and the evaluation results in the test examples.
Fig. 5 shows the first acrylic compound dependence of the low temperature response.
Fig. 6 shows the first acrylic compound dependence of the peel strength.
Fig. 7 shows the acrylic compounding ratio dependence of the peel strength.
Fig. 8 shows the first acrylic compound dependence of the haze after heat treatment.
Fig. 9 shows the acrylic compounding ratio dependence of the haze after heat treatment.
Fig. 10 shows the first acrylic compound dependence and the EO-modification dependence in the evaluation results.

### [Description of Embodiments]

### [Light Control Device 10]

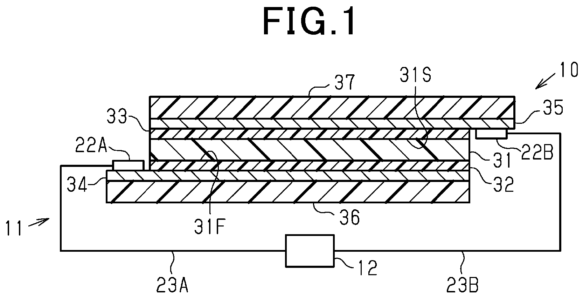

As shown in Fig. 1, a light control device 10 includes a light control sheet 11 and a driving unit 12.

The light control device 10 may be used as a partition device that divides a space. The light control sheet 11 itself may be a partition member that divides a space, or a light control adhesive body with the light control sheet 11 mounted on a transparent member may be a partition member that divides a space. The partition member may be window glass or may be a partition. The window glass may be mounted on moving objects such as vehicles and aircraft, or may be installed in buildings such as office buildings and public facilities. The partition may be provided in vehicle interiors or indoor spaces.

The light control device 10 may be used as a screen for displaying images. The light control sheet 11 itself may be a screen, or a light control adhesive body with the light control sheet 11 mounted on a transparent member may be a screen. The screen may be a front screen that uses reflected light for displaying images, or may be a rear screen that uses transmitted light for displaying images.

In the light control adhesive body, a single light control sheet 11 may be mounted on a single transparent member, or a plurality of light control sheets 11 may be mounted on a single transparent member. In the light control adhesive body, the light control sheet 11 may be sandwiched between two transparent substrates. The light control sheet 11 has flexibility. The light control adhesive body may be flexible or may not be flexible. The light control adhesive body may be flat or may be curved.

The driving type of the light control sheet 11 may be a reverse type. The driving unit 12 supplies a voltage signal to a reverse type light control sheet 11. The reverse type light control sheet 11 changes from transparent to opaque in response to an input of a voltage signal. The reverse type light control sheet 11 remains opaque during the input of a voltage signal. The reverse type light control sheet 11 returns from opaque to transparent when the supply of a voltage signal is stopped.

The driving type of the light control sheet 11 may be a normal type. The driving unit 12 supplies a voltage signal to a normal type light control sheet 11. The normal type light control sheet 11 changes from transparent to opaque in response to an input of a voltage signal. The normal type light control sheet 11 remains opaque during the input of a voltage signal. The normal type light control sheet 11 returns from opaque to transparent when the supply of a voltage signal is stopped.

The light control sheet 11 becomes opaque when the light control sheet 11 scatters transmitted light. The opaque light control sheet 11 has a lower parallel transmittance than the transparent light control sheet 11. The opaque light control sheet 11 has a higher haze than the transparent light control sheet 11. The color of the opaque light control sheet 11 may be achromatic or chromatic. The color of the transparent light control sheet 11 may be achromatic or chromatic.

### [Light Control Sheet 11]

The following description will be given mainly of a configuration and effects of the reverse type light control sheet 11. A configuration of the normal type light control sheet 11 that is different from the reverse type light control sheet 11 will be described, and configuration of the normal type light control sheet 11 that overlaps with the reverse type light control sheet 11 will be omitted.

The light control sheet 11 includes a light control layer 31, a first alignment layer 32, a second alignment layer 33, a first transparent electrode layer 34, a second transparent electrode layer 35, a first transparent support layer 36 and a second transparent support layer 37.

The light control layer 31 is located between the first alignment layer 32 and the second alignment layer 33. The light control layer 31 has a first surface 31F that is in contact with the first alignment layer 32. The light control layer 31 has a second surface 31S that is in contact with the second alignment layer 33. The first alignment layer 32 is located between the light control layer 31 and the first transparent electrode layer 34, and is in contact with the light control layer 31 and the first transparent electrode layer 34. The second alignment layer 33 is located between the light control layer 31 and the second transparent electrode layer 35, and is in contact with the light control layer 31 and the second transparent electrode layer 35.

The first transparent electrode layer 34 is connected to the driving unit 12 through a first connection terminal 22A and a first wiring 23A. The first transparent electrode layer 34 is located between the first alignment layer 32 and the first transparent support layer 36, and is in contact with the first alignment layer 32 and the first transparent support layer 36.

The second transparent electrode layer 35 is connected to the driving unit 12 through a second connection terminal 22B and a second wiring 23B. The second transparent electrode layer 35 is located between the second alignment layer 33 and the second transparent support layer 37, and is in contact with the second alignment layer 33 and the second transparent support layer 37.

The first transparent electrode layer 34 and second transparent electrode layer 35 each appear colorless and transparent, or colored and transparent. The materials constituting the first transparent electrode layer 34 and second transparent electrode layer 35 are each a conductive inorganic oxide, metal, or a conductive organic polymer compound. An example of the conductive inorganic oxide is one selected from the group consisting of indium tin oxide, fluorine-doped tin oxide, tin oxide, and zinc oxide. The metal is a gold or silver nanowire. An example of the conductive organic polymer compound is one selected from the group consisting of carbon nanotubes and poly(3,4-ethylenedioxythiophene). Each of the first transparent electrode layer 34 and the second transparent electrode layer 35 may have a thickness of, for example, 5 nm or greater and 200 nm or less.

The first transparent support layer 36 and second transparent support layer 37 each appear colorless and transparent, or colored and transparent. The materials constituting the first transparent support layer 36 and second transparent support layer 37 are each an organic polymer compound or an inorganic polymer compound. An example of the organic polymer compound is one selected from the group consisting of polyester, polyacrylate, polycarbonate and polyolefin. An example of the inorganic polymer compound is one selected from the group consisting of silicon oxide, silicon oxynitride and silicon nitride. Each of the first transparent support layer 36 and the second transparent support layer 37 may have a thickness of, for example, 20 µm or greater and 400 µm or less.

The driving unit 12 is separately connected to the first transparent electrode layer 34 and the second transparent electrode layer 35. The driving unit 12 applies a voltage between the first transparent electrode layer 34 and the second transparent electrode layer 35 by supplying a voltage signal. The driving unit 12 changes the voltage between the first transparent electrode layer 34 and the second transparent electrode layer 35 by stopping the supply of a voltage signal. The supply and stop of a voltage signal change the alignment state of a liquid crystal compound LCM. The driving unit 12 reversibly changes the light control sheet 11 between transparent and opaque states in response to a change in the alignment state of the liquid crystal compound LCM.

When the driving unit 12 stops the supply of a voltage signal, the alignment state of the liquid crystal compound LCM follows the alignment regulation force of the first alignment layer 32 and the second alignment layer 33. The alignment state of the liquid crystal compound LCM according to the alignment regulation force causes the light control layer 31 to transmit visible light. This makes the light control sheet 11 transparent. When the driving unit 12 supplies a voltage signal, the liquid crystal compound LCM is subjected to the action force of an electric field against the alignment regulation force. The alignment state of the liquid crystal compound LCM according to the action force of an electric field causes the light control layer 31 to scatter visible light. This makes the light control sheet 11 opaque.

The light control sheet 11 may include other functional layers between the first transparent electrode layer 34 and the first transparent support layer 36. The light control sheet 11 may include other functional layers between the second transparent electrode layer 35 and the second transparent support layer 37. Examples of other functional layers include a gas barrier layer that suppresses permeation of oxygen and moisture toward the light control layer 31, and an ultraviolet barrier layer that suppresses transmission of ultraviolet light of a wavelength other than the specific wavelength toward the light control layer 31. Examples of other functional layers further include a hard coat layer that physically protects the light control sheet 11, and an adhesive layer that increases the adhesion between the layers in the light control sheet 11.

### [Light Control Layer 31]

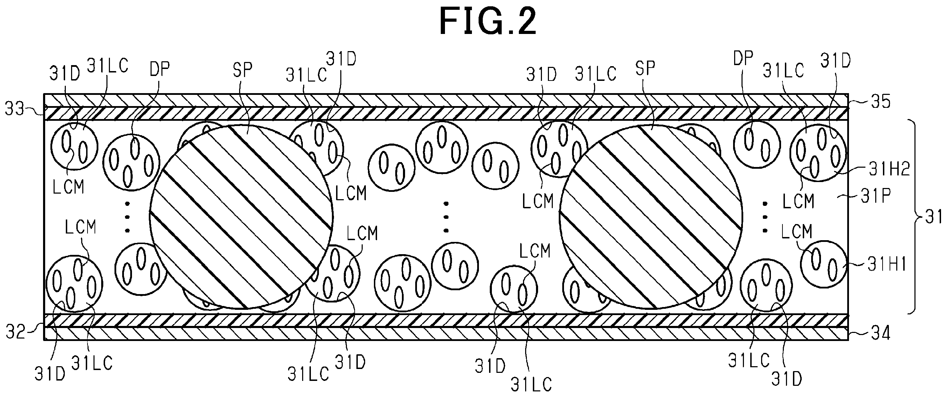

As shown in Fig. 2, the light control layer 31 include a liquid crystal composition 31LC, spacers SP and an ionizing radiation-curable resin layer 31P.

The liquid crystal composition 31LC contains the liquid crystal compound LCM. The liquid crystal composition 31LC may contain additives such as a dichroic dye DP, a defoaming agent, an antioxidant, a weathering agent and a solvent. An example of the weathering agent is a UV absorber or a photostabilizer. The liquid crystal composition 31LC does not contain a viscosity reducing agent that reduces the viscosity of the liquid crystal composition 31LC to below the viscosity of the liquid crystal compound LCM. The viscosity reducing agent may be an adipic acid ester such as dibutyl adipate, bis(2-ethylhexyl) adipate, diisononyl adipate, diisodecyl adipate, bis(2-butoxyethyl) adipate, or the like. The viscosity reducing agent may be at least one selected from the group consisting of adipic acid esters, diethyl malonate, di-n-butyl phthalate, bis(2-ethylhexyl) phthalate, tris(2-ethylhexyl) trimellitate, tributyl o-acetylcitrate and methyl benzoate. The viscosity reducing agent may be at least one selected from the group consisting of tripropyl phosphate, tributyl phosphate and tripentyl phosphate. When further improvement of responsiveness in a low-temperature environment is required, liquid crystal composition 31LC may contain a viscosity reducing agent.

The liquid crystal compound LCM may have a positive dielectric anisotropy in which the dielectric constant in the major axis direction is greater than the dielectric constant in the minor axis direction. The liquid crystal compound LCM may have a negative dielectric anisotropy in which the dielectric constant in the major axis direction is lower than the dielectric constant in the minor axis direction. The dielectric anisotropy of the liquid crystal compound LCM is suitably selected based on the driving type of the light control sheet 11.

The liquid crystal compound LCM may be at least one selected from the group consisting of Schiff base-based, azo-based, azoxy-based, biphenyl-based, terphenyl-based, benzoate-based, tolan-based, pyrimidine-based, pyridazine-based, cyclohexanecarboxylate-based, phenylcyclohexane-based, biphenylcyclohexane-based, dicyanobenzene-based, naphthalene-based and dioxane-based compounds. The liquid crystal compound LCM is a single liquid crystal compound LCM or a combination of two or more liquid crystal compounds LCM.

A structure example of the liquid crystal compound LCM is represented by the following formula 1.

R¹¹-A¹¹-Z¹¹-A¹²-Z¹²-A¹³-Z¹³-A¹⁴-R¹² ... formula 1

R¹¹ in formula 1 is a hydrogen atom or an alkyl group having 1 or more and 20 or fewer carbon atoms. One methylene bond or two or more non-adjacent methylene bonds contained in the alkyl group of R¹¹ can be replaced by one selected from the group consisting of oxygen atoms, ethylene bonds, ester bonds and diether bonds. R¹² in formula 1 is a hydrogen atom, a fluorine atom, a chlorine atom, a nitrile group, a trifluoromethyl group, a trifluoromethoxy group, a difluoromethoxy group, or an alkyl group having 1 or more and 15 or fewer carbon atoms. One methylene bond or two or more non-adjacent methylene bonds contained in the alkyl group of R¹² in formula 1 can be replaced by one selected from the group consisting of oxygen atoms, ethylene bonds, ester bonds and diether bonds.

A¹¹, A¹², A¹³ and A¹⁴ in formula 1 each independently represent a 1,4-phenylene group or a 2,6-naphthylene group. One hydrogen atom or two or more hydrogen atoms of the 1,4-phenylene group or 2,6-naphthylene group can be replaced by a fluorine atom, a chlorine atom, a trifluoromethyl group or a trifluoromethoxy group. A¹¹, A¹², A¹³ and A¹⁴ in formula 1 may be each independently a 1,4-cyclohexylene group, a 3,6-cyclohexenylene group, a 1,3-dioxane-2,5-diyl group or a pyridine-2,5-diyl group. A¹³ and A¹⁴ in formula 1 may be each independently a single bond. Z¹¹, Z¹² and Z¹³ in formula 1 each independently represent one selected from the group consisting of single bonds, ester bonds, diether bonds, ethylene bonds, fluoroethylene bonds and carbonyl bonds.

The dichroic dye DP is driven by a guest-host type structure with the liquid crystal compound LCM as the host to develop color. The dichroic dye DP may be at least one selected from the group consisting of polyiodides, azo compounds, anthraquinone compounds, naphthoquinone compounds, azomethine compounds, tetrazine compounds, quinophthalone compounds, merocyanine compounds, perylene compounds and dioxazine compounds. The dichroic dye DP is a single compound or a combination of two or more compounds. When it is necessary to enhance light resistance and increase the dichroic ratio, the dichroic dye DP may be at least one selected from the group consisting of azo compounds and anthraquinone compounds, and more preferably azo compounds.

The spacers SP are distributed throughout the entire ionizing radiation-curable resin layer 31P. The spacers SP determine the thickness of the light control layer 31 according to the particle size of the spacers SP. The thickness of the light control layer 31 may be, for example, 5 µm or greater and 100 µm or less. The spacers SP make the thickness of the light control layer 31 uniform. The spacers SP may be bead spacers, or photo-spacers formed by exposure and development of photoresist. The spacers SP may be colorless and transparent, or colored and transparent. When the liquid crystal composition 31LC contains the dichroic dye DP, the color of the spacers SP is preferably the same as the color developed by the dichroic dye DP.

### [Ionizing Radiation-Curable Resin Layer 31P]

The ionizing radiation-curable resin layer 31P is a cured product of an ionizing radiation-curable composition. The ionizing radiation may be ultraviolet light or electron beam. The ionizing radiation-curable composition may be a UV-curable composition or an electron beam-curable composition. The lower limit of the content of the ionizing radiation-curable resin layer 31P relative to the total amount of the ionizing radiation-curable resin layer 31P and the liquid crystal composition 31LC is 20 mass%, and more preferably 30 mass%. When the content of the ionizing radiation-curable resin layer 31P is 20 mass% or greater, high transmittance is likely to be obtained in the transparency state. The upper limit of the content of the ionizing radiation-curable resin layer 31P relative to the total amount of the ionizing radiation-curable resin layer 31P and the liquid crystal composition 31LC is 70 mass%, and more preferably 60 mass%. When the content of the ionizing radiation-curable resin layer 31P is 70 mass% or less, high haze is likely to be obtained in the opacity state.

The lower and upper limits of the content of the ionizing radiation-curable resin layer 31P are within the range in which liquid crystal particles made of the liquid crystal composition 31LC are phase-separated from the polymer of the ionizing radiation-curable composition in the polymerization process of the ionizing radiation-curable composition. When it is necessary to increase the mechanical strength of the ionizing radiation-curable resin layer 31P, the lower limit of the content of the ionizing radiation-curable resin layer 31P is preferably high. When it is necessary to reduce the drive voltage of the liquid crystal compound LCM, the upper limit of the content of the ionizing radiation-curable resin layer 31P is preferably low. The content of the ionizing radiation-curable resin layer 31P relative to the total amount of the ionizing radiation-curable resin layer 31P and the liquid crystal composition 31LC may be 20 mass% or greater and 70 mass% or less, and preferably 30 mass% or greater and 70 mass% or less. The content of the ionizing radiation-curable resin layer 31P relative to the total amount of the ionizing radiation-curable resin layer 31P and the liquid crystal composition 31LC may also be preferably 20 mass% or greater and 60 mass% or less, and more preferably 30 mass% or greater and 60 mass% or less.

The ionizing radiation-curable resin layer 31P defines voids 31D in the light control layer 31. The voids 31D are filled with the liquid crystal composition 31LC. Each void 31D may be isolated from the other adjacent voids 31D, or connected to the other adjacent voids 31D. The voids 31D have two or more sizes. The shape of the voids 31D is spherical, ellipsoidal or irregular. The diameter of the sphere circumscribing the void 31D may be 0.4 µm or greater, and preferably 1 µm or greater. The diameter of the sphere circumscribing the void 31D may be 20 µm or less, and preferably 10 µm or less. The diameter of the sphere circumscribing the void 31D may be, for example, 1 µm or greater and 10 µm or less.

The voids 31D may be unevenly distributed in the ionizing radiation-curable resin layer 31P, or may be uniformly distributed in the ionizing radiation-curable resin layer 31P. The voids 31D may be unevenly distributed in a region 31H1 closer to the first alignment layer 32 than to the center of the ionizing radiation-curable resin layer 31P in the thickness direction such that more voids 31D are located in the area closer to the first alignment layer 32. The voids 31D may be unevenly distributed in a region 31H2 closer to the second alignment layer 33 than to the center of the ionizing radiation-curable resin layer 31P in the thickness direction such that more voids 31D are located in the area closer to the second alignment layer 33. The ionizing radiation-curable resin layer 31P may have a portion where no void 31D is present in the center of the ionizing radiation-curable resin layer 31P in the thickness direction, and may have the voids 31D between the portion and the first alignment layer 32. The ionizing radiation-curable resin layer 31P may have a portion where no void 31D is present in the center of the ionizing radiation-curable resin layer 31P in the thickness direction, and may have the voids 31D between the portion and the second alignment layer 33.

The voids 31D are formed by phase separation between the cured product of the ionizing radiation-curable composition and the liquid crystal composition 31LC. In the ionizing radiation-curable resin layer 31P, the region 31H1 closer to the first alignment layer 32 than to the center in the thickness direction is the area where irradiation with ionizing radiation begins, and where the voids 31D begin to form. Also, in the ionizing radiation-curable resin layer 31P, the region 31H2 closer to the second alignment layer 33 than to the center in the thickness direction is the area where irradiation with ionizing radiation begins, and where the voids 31D begin to form.

In the ionizing radiation-curable resin layer 31P, the region 31H1 closer to the first alignment layer 32 than to the center in the thickness direction is also the area where low molecular weight impurities start to diffuse from the first alignment layer 32. In the ionizing radiation-curable resin layer 31P, the region 31H2 closer to the second alignment layer 33 than to the center in the thickness direction is also the area where low molecular weight impurities start to diffuse from the second alignment layer 33. Therefore, the configuration in which the voids 31D are concentrated in the region 31H1 closer to the first alignment layer 32, that is, the configuration in which the liquid crystal compositions 31LC is concentrated in the region 31H1 closer to the first alignment layer 32, strongly requires diffusion of low molecular weight impurities. Also, the configuration in which the voids 31D are concentrated in the region 31H2 closer to the second alignment layer 33, that is, the configuration in which the liquid crystal compositions 31LC is concentrated in the region 31H2 closer to the second alignment layer 33, strongly requires diffusion of low molecular weight impurities.

Phase separation between the cured product of the ionizing radiation-curable composition and the liquid crystal composition 31LC causes low molecular weight compounds, such as unreacted ionizing radiation-curable compound, by-products of the ionizing radiation-curable compound, such as water, and solvents of the ionizing radiation-curable composition, to remain in the liquid crystal composition 31LC. The degree to which the low molecular weight compounds, such as the ionizing radiation-curable compound, by-products such as water, and solvents, increase the viscosity with a decrease in temperature is greater than the degree to which the liquid crystal compound LCM increases the viscosity with a decrease in temperature in a low-temperature environment such as cold regions. Densifying the cured product of the ionizing radiation-curable composition during the phase separation process between the cured product of the ionizing radiation-curable composition and the liquid crystal composition 31LC prevents low molecular weight compounds from remaining in the liquid crystal composition 31LC. Preventing the low molecular weight compounds from remaining in the liquid crystal composition 31LC suppresses thickening of the liquid crystal composition 31LC in a low-temperature environment.

The type in which the liquid crystal composition 31LC is held by the ionizing radiation-curable resin layer 31P is one selected from the group consisting of a polymer dispersion type, a polymer network type and a capsule type. A polymer dispersion type light control layer 31 includes the ionizing radiation-curable resin layer 31P that defines a plurality of isolated voids 31D. The polymer dispersion type light control layer 31 holds the liquid crystal composition 31LC in the voids 31D dispersed in the ionizing radiation-curable resin layer 31P. A polymer network type light control layer 31 includes three-dimensional mesh-like voids 31D in the ionizing radiation-curable resin layer 31P. The polymer network type light control layer 31 holds the liquid crystal composition 31LC in the mesh-like voids 31D communicating with each other. A capsule type light control layer 31 holds the liquid crystal composition 31LC in the capsule-like voids 31D dispersed in the ionizing radiation-curable resin layer 31P.

The ionizing radiation-curable resin layer 31P is formed by applying a light control coating liquid containing an ionizing radiation-curable composition and the liquid crystal composition 31LC, and irradiating the coating layer with ionizing radiation. The light control coating liquid contains a polymerization initiator for initiating polymerization of the ionizing radiation-curable composition. The ionizing radiation-curable resin layer 31P contains the polymerization initiator that initiates polymerization. The polymerization initiator may be at least one selected from the group consisting of diketone compounds, acetophenone compounds, benzoin compounds, benzophenone compounds and thioxanthone compounds. The polymerization initiator may be a single compound or a combination of two or more compounds. An example of the polymerization initiator is one selected from the group consisting of benzoin methyl ether, benzoin ethyl ether, benzoin isopropyl ether and cyclohexyl phenyl ketone.

### [First Acrylic Compound]

The ionizing radiation-curable composition contains a first acrylic compound. The first acrylic compound has 3 or more functional groups, and has a double bond equivalent weight of 150 g/eq or less. The functional groups may include acryloyl groups and methacryloyl groups. The double bond equivalent weight is a value obtained by dividing the molecular weight of the first acrylic compound by the number of functional groups. The number of functional groups is the sum of the number of acryloyl groups and the number of methacryloyl groups contained in the first acrylic compound. The first acrylic compound may be contained in the electron beam-curable compound as a monomer. The first acrylic compound may be contained in the electron beam-curable compound as a component of a urethane acrylate such as a urethane prepolymer. When the first acrylic compound is a component of a urethane acrylate, the double bond equivalent weight is determined based on the backbone structure of the first acrylic compound in the urethane acrylate.

Examples of the first acrylic compound include pentaerythritol compounds, trimethylolpropane compounds and glycol compounds. Examples of the pentaerythritol compounds include pentaerythritol diacrylate, pentaerythritol dimethacrylate, pentaerythritol triacrylate, pentaerythritol trimethacrylate, pentaerythritol tetraacrylate, pentaerythritol tetramethacrylate, pentaerythritol ethoxytetraacrylate, dipentaerythritol triacrylate, dipentaerythritol tetraacrylate, dipentaerythritol tetramethacrylate, dipentaerythritol ethoxytetraacrylate, dipentaerythritol hexaacrylate, dipentaerythritol hexamethacrylate and trispentaerythritol octaacrylate. Examples of the trimethylolpropane compounds include trimethylolpropane triacrylate, trimethylolpropane trimethacrylate, trimethylolpropane ethoxytriacrylate, ditrimethylol tetraacrylate and ditrimethylol tetramethacrylate. Examples of the glycol compounds include glycerin diacrylate, glycerin triacrylate, glycerin trimethacrylate, dipropylene glycol diacrylate, tripropylene glycol diacrylate and 1,6-hexanediol diacrylate. Examples of the prepolymers containing the first acrylic compound include pentaerythritol triacrylate isophorone diisocyanate urethane prepolymer.

The ionizing radiation-curable composition may contain a radical curing aid. The ionizing radiation-curable resin layer 31P may contain a radical curing aid. The radical curing aid enhances polymerization of acrylic compounds. The polymerization of acrylic compounds is stopped by formation of peroxide radicals. An example of the radical curing aid contains a thiol group. The thiol group of the radical curing aid promotes polymerization of acrylic compounds by donating hydrogen to peroxide radicals. An example of the radical curing aid may be a primary multifunctional thiol compound or a secondary multifunctional thiol compound. Examples of the primary multifunctional thiol compound include pentaerythritol tetrakis(3-mercaptopropionate) and tetraethylene glycol bis(3-mercaptopropionate). Examples of the secondary multifunctional thiol compound include pentaerythritol tetrakis(3-mercaptobutylate).

### [Second Acrylic Compound]

The ionizing radiation-curable composition contains a second acrylic compound. The second acrylic compound includes monofunctional alkyl acrylate, monofunctional alkyl methacrylate, monofunctional alkoxyalkyl acrylate and monofunctional alkoxyalkyl methacrylate. Each of the monofunctional alkyl acrylate and the monofunctional alkyl methacrylate contains a saturated alkyl group having 2 or more and 12 or fewer carbon atoms. Each of the monofunctional alkoxyalkyl acrylate and the monofunctional alkoxyalkyl methacrylate contains a saturated alkoxyalkyl group having 2 or more and 12 or fewer carbon atoms. The saturated alkyl group may be a linear alkyl group, a branched alkyl group, a monocyclic alkyl group or a polycyclic alkyl group. The saturated alkoxyalkyl group may be a linear alkoxyalkyl group or a branched alkoxyalkyl group.

Examples of the second acrylic compound include ethylacrylate, propyl acrylate, isopropyl acrylate, butyl acrylate, isobutyl acrylate, hexyl acrylate, 2-ethylbutyl acrylate, 2-ethylhexyl acrylate, lauryl acrylate, methoxyethyl methacrylate, octyl acrylate, ethyl methacrylate, propyl methacrylate, isopropyl methacrylate, butyl methacrylate, hexyl methacrylate, 2-ethylbutyl methacrylate, 2-ethylhexyl methacrylate, octyl methacrylate, lauryl methacrylate, cyclohexyl acrylate, cyclopentyl acrylate, dicyclopentanyl acrylate, norbornyl acrylate, norbornyl methacrylate, isobornyl acrylate and isobornyl methacrylate.

### [Third Acrylic Compound]

The ionizing radiation-curable composition contains a third acrylic compound. The third acrylic compound has 1 or more and 3 or less functional groups and a polyethylene oxide chain, and has a double bond equivalent weight of 300 g/eq or greater and 700 g/eq or less. The functional groups may include acryloyl groups and methacryloyl groups. The double bond equivalent weight is a value obtained by dividing the molecular weight of the third acrylic compound by the number of functional groups. The number of functional groups is the sum of the number of acryloyl groups and the number of methacryloyl groups contained in the third acrylic compound. The third acrylic compound may be contained in the electron beam-curable compound as a monomer. The third acrylic compound may be contained in the electron beam-curable compound as a component of a urethane acrylate such as a urethane prepolymer.

Examples of the third acrylic compound include polyethylene glycol compounds, alkoxy polyethylene glycol compounds and polyethylene oxide-modified trimethylolpropane compounds (EO-modified trimethylolpropane compounds). Examples of the third acrylic compound include polyethylene glycol acrylate, polyethylene glycol methacrylate, polyethylene glycol diacrylate, polyethylene glycol dimethacrylate, polypropylene glycol acrylate, polypropylene glycol methacrylate, polypropylene glycol diacrylate, polypropylene glycol dimethacrylate, methoxy polyethylene glycol acrylate, methoxy polypropylene glycol acrylate, EO-modified trimethylolpropane triacrylate, EO-modified trimethylolpropane trimethacrylate, EO-modified ditrimethylol tetraacrylate and EO-modified ditrimethylol tetramethacrylate.

### [Acrylic Compound Content]

The ionizing radiation-curable composition may satisfy the following conditions 1, 2 and 3 simultaneously. Alternatively, the ionizing radiation-curable composition may satisfy the following conditions 1, 2 and 4 simultaneously. The ionizing radiation-curable composition may satisfy the following conditions 1A, 2A and 3 simultaneously. The ionizing radiation-curable composition may satisfy the following conditions 1A, 2A and 4 simultaneously. Alternatively, the ionizing radiation-curable composition satisfies the following conditions 1B, 2B and 3 simultaneously. The ionizing radiation-curable composition may satisfy the following conditions 1B, 2B and 4 simultaneously. Furthermore, the ionizing radiation-curable composition may satisfy the following condition 5, or may satisfy the following condition 6.

[Condition 1] The first acrylic compound content is 2 mass% or greater and 50 mass% or less.
[Condition 1A] The first acrylic compound content is 2 mass% or greater and 40 mass% or less.
[Condition 1B] The first acrylic compound content is 2 mass% or greater and 30 mass% or less.
[Condition 2] The second acrylic compound content is 35 mass% or greater and 85 mass% or less.
[Condition 2A] The second acrylic compound content is 45 mass% or greater and 85 mass% or less.
[Condition 2B] The second acrylic compound content is 55 mass% or greater and 85 mass% or less.
[Condition 3] The third acrylic compound content is 5 mass% or greater and 20 mass% or less.
[Condition 4] The acrylic compounding ratio is 0.25 or greater.
[Condition 4A] The acrylic compounding ratio is 0.25 or greater and 2.0 or less.
[Condition 5] The number of functional groups of the first acrylic compound is 3 or more and 5 or less, and the first acrylic compound content is 30 mass% or less.
[Condition 6] The polyethylene oxide chain content is 2 mass% or greater and 20 mass% or less.

The first acrylic compound content is the ratio of the weight of the first acrylic compound to the total weight of the ionizing radiation-curable composition for forming the ionizing radiation-curable resin layer 31P. The total weight of the ionizing radiation-curable composition is the sum of the weight of the first acrylic compound, the weight of the radical curing aid, the weight of the second acrylic compound and the weight of the third acrylic compound.

The second acrylic compound content is the ratio of the weight of the second acrylic compound to the total weight of the ionizing radiation-curable composition for forming the ionizing radiation-curable resin layer 31P.

The third acrylic compound content is the ratio of the weight of the third acrylic compound to the total weight of the ionizing radiation-curable composition for forming the ionizing radiation-curable resin layer 31P.

The polyethylene oxide chain content is the ratio of the weight of the polyethylene oxide chain to the total weight of the ionizing radiation-curable composition for forming the ionizing radiation-curable resin layer 31P.

The acrylic compounding ratio is the ratio of the third acrylic compound content to the first acrylic compound content.

### [First Alignment layer 32 and Second Alignment Layer 33]

The first alignment layer 32 and the second alignment layer 33 each regulate the alignment direction of the liquid crystal compound LCM. The first alignment layer 32 and the second alignment layer 33 each appear colorless and transparent, or colored and transparent. The first alignment layer 32 and the second alignment layer 33 may be vertical alignment films or horizontal alignment films.

The materials constituting the first alignment layer 32 and second alignment layer 33 are organic polymer compounds or inorganic oxides. An example of the organic polymer compounds is one selected from the group consisting of polyimide, polyamide and polyvinyl alcohol. An example of the inorganic oxides is one selected from the group consisting of silicon oxide, zirconium oxide and silicone. The materials constituting the first alignment layer 32 and the second alignment layer 33 contain organic polymer compounds or low molecular weight impurities for producing inorganic oxides. Examples of the low molecular weight impurities include polyimide precursors such as polyamic acids used in the production of polyimide, and water produced by imidization of polyamic acids. Each of the first alignment layer 32 and the second alignment layer 33 may have a thickness of, for example, 20 nm or greater and 500 nm or less.

When each of the first alignment layer 32 and the second alignment layer 33 is a vertical alignment film, the first alignment layer 32 and the second alignment layer 33 each apply an alignment regulation force to the liquid crystal compound LCM so that the major axis direction of the liquid crystal compound LCM is aligned along the thickness direction of the light control layer 31. As a result, the first alignment layer 32 and the second alignment layer 33 allow visible light to pass through the light control layer 31 during the period when the voltage signal supply is stopped.

When each of the first alignment layer 32 and the second alignment layer 33 is a horizontal alignment film, the light control sheet 11 includes a polarizing layer. The first alignment layer 32 and the second alignment layer 33 apply an alignment regulation force to the liquid crystal compound LCM so that the major axis direction of the liquid crystal compound LCM is parallel to the extension direction of the transmission axis of the polarizing layer. As a result, the first alignment layer 32 and the second alignment layer 33 allow visible light to pass through the light control layer 31 via the polarizing layers during the period when the voltage signal supply is stopped.

When each of the first alignment layer 32 and the second alignment layer 33 is a horizontal alignment film, the light control sheet 11 includes polarizing layers arranged in crossed Nicols. The first alignment layer 32 applies an alignment regulation force to the liquid crystal compound LCM so that the major axis direction of the liquid crystal compound LCM is parallel to the extension direction of the transmission axis of one polarizing layer. The second alignment layer 33 applies an alignment regulation force to the liquid crystal compound LCM so that the major axis direction of the liquid crystal compound LCM is parallel to the extension direction of the transmission axis of the other polarizing layer. That is, the first alignment layer 32 and the second alignment layer 33 apply a twist alignment regulation force to the liquid crystal compound LCM. As a result, the first alignment layer 32 and the second alignment layer 33 allow visible light to pass through the light control layer 31 via the polarizing layers during the period when the voltage signal supply is stopped.

When each of the first alignment layer 32 and the second alignment layer 33 is a horizontal alignment film, the light control sheet 11 includes two polarizing layers having transmission axes parallel to each other. The first alignment layer 32 and the second alignment layer 33 apply an alignment regulation force to the liquid crystal compound LCM so that the major axis direction of the liquid crystal compound LCM intersects at 45° with the extension direction of the transmission axes of the polarizing layers. As a result, the first alignment layer 32 and the second alignment layer 33 suppress the transmission of visible light through the light control layer 31 via the polarizing layers during the period when the voltage signal supply is stopped. A voltage applied between the first transparent electrode layer 34 and the second transparent electrode layer 35 imparts vertical alignment to the liquid crystal compound LCM against the alignment regulation force, allowing visible light through the polarizing layers to pass through the light control layer 31.

In addition, the light control sheet 11 may not necessarily include the first alignment layer 32 and the second alignment layer 33. The light control layer 31 of the light control sheet 11 which does not include the first alignment layer 32 and the second alignment layer 33 may be in contact with the first transparent electrode layer 34 or may be in contact with the second transparent electrode layer 35.

### [Method of Producing Light Control Sheet 11]

A method of producing a light control sheet 11 includes forming a light control coating layer containing an ionizing radiation-curable composition and a liquid crystal composition 31LC between a first transparent electrode layer 34 and a second transparent electrode layer 35. The method of producing the light control sheet 11 includes irradiating the light control coating layer with ionizing radiation to form a light control layer 31 between the first transparent electrode layer 34 and the second transparent electrode layer 35.

When the light control sheet 11 includes a first alignment layer 32 and a second alignment layer 33, the method of producing the light control sheet 11 includes forming the first alignment layer 32 on the first transparent electrode layer 34 and forming the second alignment layer 33 on the second transparent electrode layer 35. The first alignment layer 32 is formed by applying an alignment coating liquid to the first transparent electrode layer 34 laminated on a first transparent support layer 36 to form an alignment coating layer, and then heating the alignment coating layer. The second alignment layer 33 is formed by applying an alignment coating liquid to the second transparent electrode layer 35 laminated on a second transparent support layer 37 to form an alignment coating layer, and then heating the alignment coating layer.

The method of producing the light control sheet 11 includes forming a light control coating layer containing an ionizing radiation-curable composition and the liquid crystal composition 31LC between the first alignment layer 32 and the second alignment layer 33. The light control coating layer is formed by applying a light control coating liquid to the first alignment layer 32 supported by the first transparent support layer 36. The light control coating layer is sandwiched between the first alignment layer 32 supported by the first transparent support layer 36 and the second alignment layer 33 supported by the second transparent support layer 37. Further, when the light control sheet 11 does not include the first alignment layer 32 and the second alignment layer 33, the light control coating layer is formed by applying a light control coating liquid to the first transparent electrode layer 34 supported by the first transparent support layer 36. The light control coating layer is sandwiched between the first transparent electrode layer 34 supported by the first transparent support layer 36 and the second transparent electrode layer 35 supported by the second transparent support layer 37.

The method of producing the light control sheet 11 includes irradiating the light control coating layer with ionizing radiation to form a light control layer 31 including an ionizing radiation-curable resin layer 31P that defines voids 31D and a liquid crystal composition 31LC filled in the voids 31D between the first transparent electrode layer 34 and the second transparent electrode layer 35. The light control coating layer may be irradiated with ionizing radiation from the first transparent support layer 36 toward the light control coating layer, or from the second transparent support layer 37 toward the light control coating layer, or in a combination of these.

The ionizing radiation-curable composition irradiated with ionizing radiation initiates polymerization while phase-separating liquid crystal particles made of the liquid crystal composition 31LC from the polymer. The phase separation of the liquid crystal particles made of the liquid crystal composition 31LC proceeds through the polymerization of the ionizing radiation-curable composition and the dispersion of the liquid crystal composition 31LC. The polymerization rate of the ionizing radiation-curable composition depends on the intensity of the ionizing radiation applied to the ionizing radiation-curable composition. The dispersion rate of the liquid crystal composition 31LC depends on the treatment temperature during polymerization of the ionizing radiation-curable composition. In the phase separation of the liquid crystal composition 31LC, the intensity of the ionizing radiation applied to the ionizing radiation-curable composition is set so that the liquid crystal particles have the desired size, that is, the voids 31D have the desired size. Further, in the phase separation of the liquid crystal composition 31LC, heating may be performed to promote the dispersion of the liquid crystal composition 31LC.

When it is necessary to reduce the size of the voids 31D, it is preferable to increase the intensity of the ionizing radiation applied to the ionizing radiation-curable composition, and advance the polymerization at a low temperature to suppress the dispersion of the liquid crystal composition 31LC. When it is necessary to increase the size of the voids 31D, it is preferable to decrease the intensity of the ionizing radiation applied to the ionizing radiation-curable composition, and advance the polymerization at a high temperature to promote the dispersion of the liquid crystal composition 31LC.

### [Test Examples]

The light control sheets 11 of the respective test examples are shown below. The light control sheets 11 of the respective test examples include vertical alignment films as the first alignment layer 32 and the second alignment layer 33. The drive type of the respective test examples is a reverse type. The light control sheets 11 of Test Examples 1 to 13 were obtained in the same manner, except that the ionizing radiation-curable compositions used were different. The light control sheets 11 of Test Examples 14 to 17 were obtained in the same manner, except that the ionizing radiation-curable compositions and the liquid crystal compositions 31LC used were different.

First, the constituent materials of the first transparent electrode layer 34, the second transparent electrode layer 35, the first transparent support layer 36 and the second transparent support layer 37 are shown below.
- First transparent electrode layer 34: Indium tin oxide having 30 nm thickness
- Second transparent electrode layer 35: Indium tin oxide having 30 nm thickness
- First transparent support layer 36: Polyethylene terephthalate film having 125 µm thickness
- Second transparent support layer 37: Polyethylene terephthalate film having 125 µm thickness

### [First Alignment layer 32 and Second Alignment Layer 33]

Next, the constituent materials and production methods of the first alignment layer 32 and the second alignment layer 33 are shown below.

First, polyamic acids were produced in a solvent using diamines shown as raw materials B1 and B2 below and carboxylic anhydrides shown as raw materials C1 and C2 below. In this process, 10 parts by weight of the raw material B1, 8 parts by weight of the raw material B2 and 4 parts by weight of the raw material C2 were reacted in 75 parts by weight of a first solvent for 5 hours while heating to 80°C. Next, 16 parts by weight of the raw material C1 and 38 parts by weight of the first solvent were added and reacted for 6 hours while heating to 40°C. As a result, a polyamic acid solution with a resin solid concentration of 25 mass% was obtained. Next, an alignment layer coating liquid was obtained from the polyamic acid solution with a resin solid concentration of 25 mass%, the first solvent and a second solvent. In this process, 12 parts by weight of the polyamic acid solution, 27 parts by weight of the first solvent and 36 parts by weight of the second solvent were mixed and stirred for 24 hours while heating to 50°C.

Next, the alignment coating liquid was applied to the first transparent electrode layer 34 using a bar coater, which was then heated to 150°C for 4 minutes. As a result, a first alignment layer 32 having 100 nm thickness and containing polyimide as a main component was obtained. Similarly, the alignment coating liquid was applied to the second transparent electrode layer 35 using a bar coater, which was then heated to 150°C for 4 minutes. As a result, a second alignment layer 33 having 100 nm thickness and containing polyimide as a main component was obtained.

### [Raw Materials for Alignment Coating Liquid]

- B1: 4,4'-diaminodiphenylmethane (manufactured by Tokyo Chemical Industry Co., Ltd.)
- B2: 3,5-diaminobenzoic acid (manufactured by Tokyo Chemical Industry Co., Ltd.)
- C1: 1,2,3,4-cyclobutanetetracarboxylic dianhydride (manufactured by Tokyo Chemical Industry Co., Ltd.)
- C2: 3-(carboxymethyl)-1,2,4-cyclopentanetricarboxylic acid 1,4:2,3-dianhydride (manufactured by Tokyo Chemical Industry Co., Ltd.)
- First solvent: N-ethyl-2-pyrrolidone
- Second solvent: Butyl cellosolve

### [Light Control Layer 31]

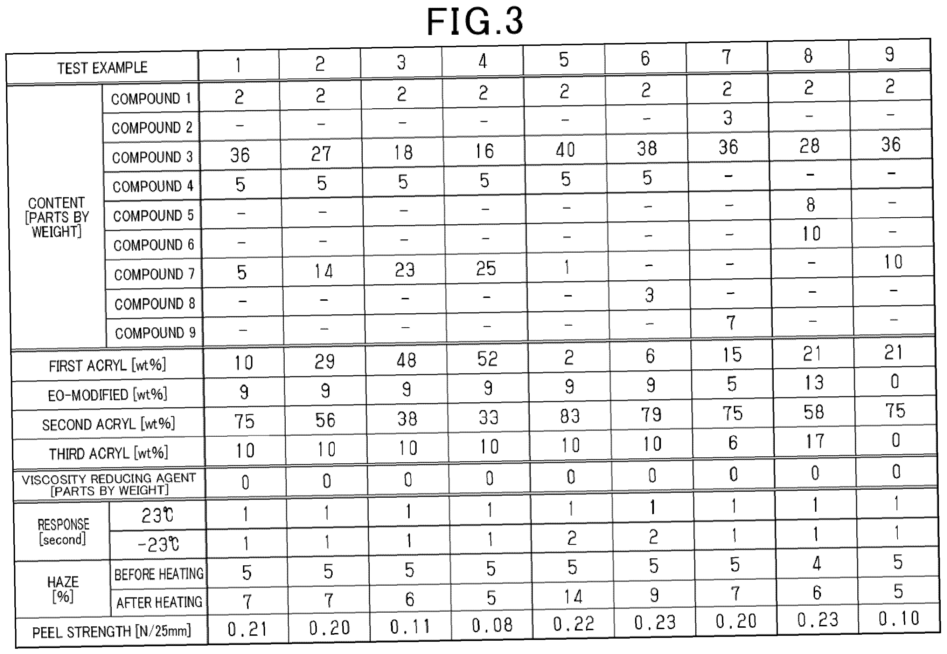

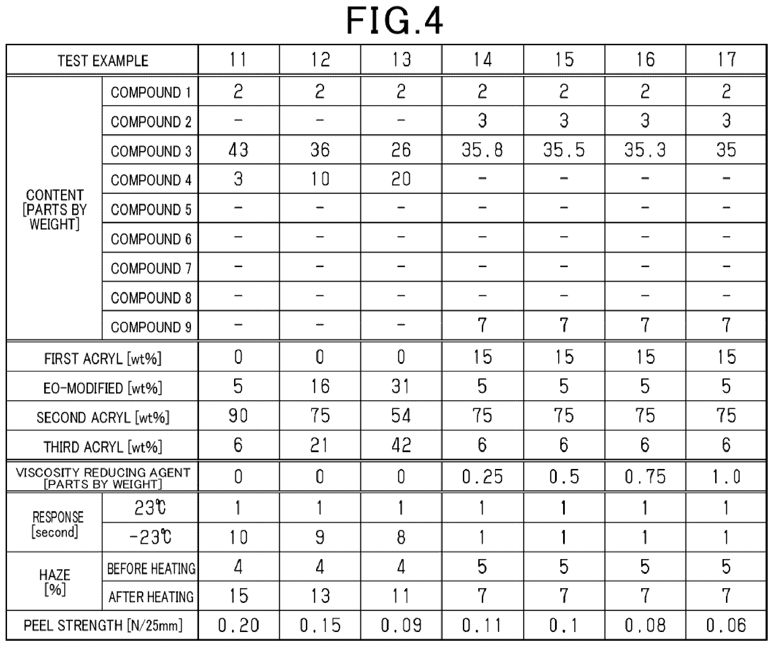

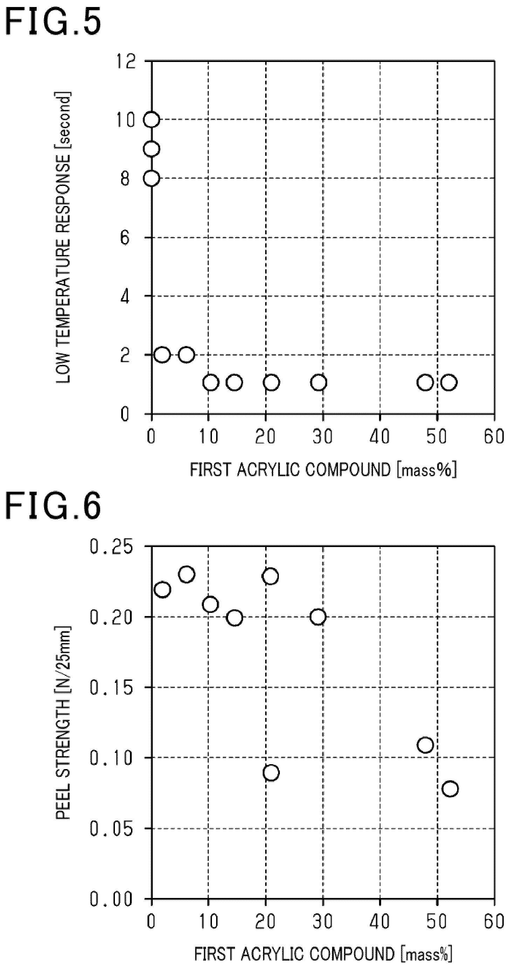

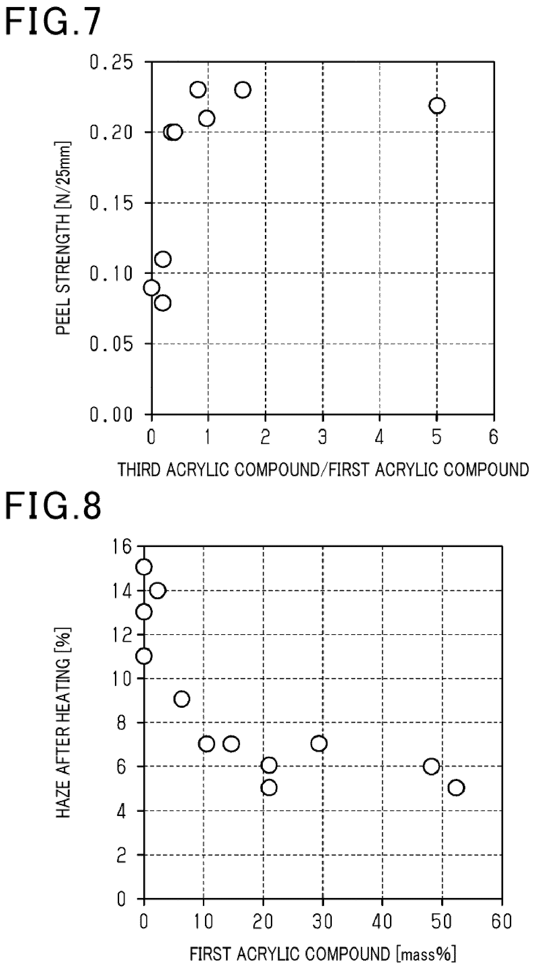

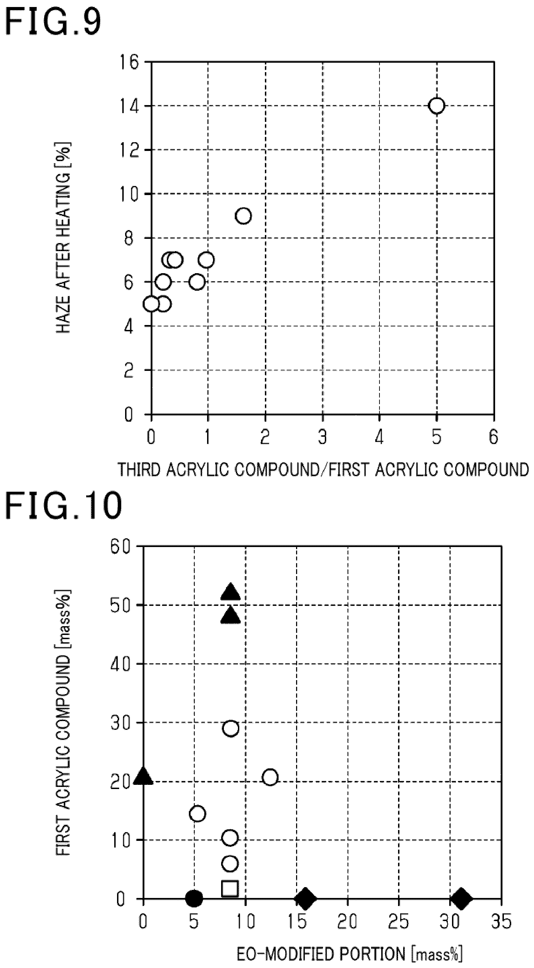

Next, the constituent materials and production methods of the light control layer 31 are shown below. Figs. 3 and 4 show the constituent materials of the ionizing radiation-curable compositions and the evaluation results of the light control sheets 11 of Test Examples 1 to 17. Fig. 5 shows the first acrylic compound dependence of the responsiveness of the light control sheets 11 of Test Examples 1 to 13 in a low-temperature environment. Fig. 6 shows the first acrylic compound dependence of the peel strength in the light control sheets 11 of Test Examples 1 to 13. Fig. 7 shows the acrylic compounding ratio dependence of the peel strength in the light control sheets 11 of Test Examples 1 to 9. Fig. 8 shows the first acrylic compound dependence of the haze after heat treatment of the light control sheets 11 of Test Examples 1 to 13. Fig. 9 shows the acrylic compounding ratio dependence of the haze after heat treatment of the light control sheets 11 of Test Examples 1 to 9. Fig. 10 shows the first acrylic compound content and the EO-modification dependence for the evaluation results of the light control sheets 11 of Test Examples 1 to 13.

First, a light control coating liquid was prepared using the following liquid crystal compound LCM, spacer SP, polymerization initiator and ionizing radiation-curable composition. The ionizing radiation-curable composition was a mixture of compounds selected from Compounds 1 to 9. In this process, as the light control layer coating liquids of Test Examples 1 to 13, 50 parts by weight of the liquid crystal compound LCM, 1 part by weight of the polymerization initiator and 1 part by weight of the spacer SP were mixed with 48 parts by weight of the ionizing radiation-curable composition. As the light control layer coating liquids of Test Examples 14 and 15, 50 parts by weight of the liquid crystal compound LCM, 1 part by weight of the polymerization initiator, 0.25 parts by weight or greater and 1 part by weight or less of the viscosity reducing agent and 1 part by weight of the spacer SP were mixed with 47 parts by weight or greater and 47.75 parts by weight or less of the ionizing radiation-curable composition.

Next, the light control coating liquid was applied to the first alignment layer 32 using a bar coater to form a light control coating layer, and the second alignment layer 33 was provided on the light control coating layer so that the light control coating layer sandwiched between the first alignment layer 32 and the second alignment layer 33 was formed. Next, ultraviolet light was irradiated from the first transparent support layer 36 toward the light control coating layer, and ultraviolet light was irradiated from the second transparent support layer 37 toward the light control coating layer. As a result, a light control layer 31 having 10 µm thickness was obtained.

### [Raw Materials for Light Control Coating Liquid]

- Liquid crystal compound LCM: Fluorine-based nematic mixed liquid crystal (product name: MLC-6608, refractive index anisotropy Δn = 0.20 (manufactured by Merck Ltd.))
- Spacer SP: 10 µm-diameter spherical shape made of PMMA (manufactured by Sekisui Kasei Co., Ltd.)
- Polymerization initiator: 1-hydroxycyclohexyl phenyl ketone (manufactured by IGM Resins B.V.)
- Viscosity reducing agent: Diisodecyl adipate (manufactured by Tokyo Chemical Industry Co., Ltd.)

### [Ionizing Radiation-Curable Composition]

Compound 1 was pentaerythritoltetrakis(3-mercaptobutyrate) (product name: Karenz MT PE-1 (manufactured by Showa Denko K.K.)). Compound 1 was a radical curing aid.

Compound 2 was a monofunctional acrylic compound and was methoxy polyethylene glycol acrylate (product name: AM-130G (manufactured by Shin-Nakamura Chemical Co., Ltd.)). The double bond equivalent weight of Compound 2 was 658 g/eq. Compound 2 contained a polyethylene oxide chain between the acrylate group and the methoxy group. The polyethylene oxide chain had ethylene oxide as a repeating unit. The number of repeats in the polyethylene oxide chain of Compound 2 was 13. Compound 2 was an example of the third acrylic compound.

Compound 3 was a monofunctional acrylic compound and was isobornyl acrylate (product name: IBXA (manufactured by Osaka Organic Chemical Industry Ltd.)). The double bond equivalent weight of Compound 3 was 208 g/eq. Compound 3 was an example of the second acrylic compound.

Compound 4 was a bifunctional acrylic compound and was ethoxy polyethylene glycol acrylate (product name: Light acrylate 14EGA (manufactured by Kyoeisha Chemical Co., LTD.)). The double bond equivalent weight of Compound 4 was 371 g/eq. Compound 4 was an example of the third acrylic compound containing a polyethylene oxide chain.

Compound 5 was a trifunctional acrylic compound and was polyethylene oxide-modified trimethylolpropane triacrylate (product name: AT-20E (manufactured by Shin-Nakamura Chemical Co., Ltd.)). The double bond equivalent weight of Compound 5 was 392 g/eq. Compound 5 was an example of the third acrylic compound containing a polyethylene oxide chain.

Compound 6 was a trifunctional acrylic compound and was trimethylolpropane triacrylate (manufactured by Shin-Nakamura Chemical Co., Ltd.). The double bond equivalent weight of Compound 6 was 99 g/eq. Compound 6 was an example of the first acrylic compound.

Compound 7 was a tetrafunctional acrylic compound and was pentaerythritol tetraacrylate (manufactured by Shin-Nakamura Chemical Co., Ltd.). The double bond equivalent weight of Compound 7 was 88 g/eq. Compound 7 was an example of the first acrylic compound.

Compound 8 was a hexafunctional acrylic compound and was pentaerythritol triacrylate isophorone diisocyanate urethane prepolymer (product name: 306I (manufactured by Kyoeisha Chemical Co., Ltd.). The double bond equivalent weight of Compound 8 was 136 g/eq. Compound 8 was a urethane prepolymer of the first acrylic compound.

Compound 9 was a hexafunctional acrylic compound and was dipentaerythritol hexaacrylate (manufactured by Shin-Nakamura Chemical Co., Ltd.). The double bond equivalent weight of Compound 9 was 96 g/eq. Compound 9 was an example of the first acrylic compound.

### [Formulation]

As shown in Fig. 3, the ionizing radiation-curable composition of Test Example 1 was a mixture of 2 parts by weight of Compound 1 (radical curing aid), 36 parts by weight of Compound 3 (second acrylic compound), 5 parts by weight of Compound 4 (third acrylic compound) and 5 parts by weight of Compound 7 (first acrylic compound). The first acrylic compound content in Test Example 1 was 10 mass%. The polyethylene oxide chain content in Test Example 1 was 9 mass%. The second acrylic compound content in Test Example 1 was 75 mass%. The third acrylic compound content in Test Example 1 was 10 mass%.

The ionizing radiation-curable composition of Test Example 2 was a mixture of 2 parts by weight of Compound 1 (radical curing aid), 27 parts by weight of Compound 3 (second acrylic compound), 5 parts by weight of Compound 4 (third acrylic compound) and 14 parts by weight of Compound 7 (first acrylic compound). The first acrylic compound content in Test Example 2 was 29 mass%. The polyethylene oxide chain content in Test Example 2 was 9 mass%. The second acrylic compound content in Test Example 2 was 56 mass%. The third acrylic compound content in Test Example 2 was 10 mass%.

The ionizing radiation-curable composition of Test Example 3 was a mixture of 2 parts by weight of Compound 1 (radical curing aid), 18 parts by weight of Compound 3 (second acrylic compound), 5 parts by weight of Compound 4 (third acrylic compound) and 23 parts by weight of Compound 7 (first acrylic compound). The first acrylic compound content in Test Example 3 was 48 mass%. The polyethylene oxide chain content in Test Example 3 was 9 mass%. The second acrylic compound content in Test Example 3 was 38 mass%. The third acrylic compound content in Test Example 3 was 10 mass%.

The ionizing radiation-curable composition of Test Example 4 was a mixture of 2 parts by weight of Compound 1 (radical curing aid), 16 parts by weight of Compound 3 (second acrylic compound), 5 parts by weight of Compound 4 (third acrylic compound) and 25 parts by weight of Compound 7 (first acrylic compound). The first acrylic compound content in Test Example 4 was 52 mass%. The polyethylene oxide chain content in Test Example 4 was 9 mass%. The second acrylic compound content in Test Example 4 was 33 mass%. The third acrylic compound content in Test Example 4 was 10 mass%.

The ionizing radiation-curable composition of Test Example 5 was a mixture of 2 parts by weight of Compound 1 (radical curing aid), 40 parts by weight of Compound 3 (second acrylic compound), 5 parts by weight of Compound 4 (third acrylic compound) and 1 part by weight of Compound 7 (first acrylic compound). The first acrylic compound content in Test Example 5 was 2 mass%. The polyethylene oxide chain content in Test Example 5 was 9 mass%. The second acrylic compound content in Test Example 5 was 83 mass%. The third acrylic compound content in Test Example 5 was 10 mass%.

The ionizing radiation-curable composition of Test Example 6 was a mixture of 2 parts by weight of Compound 1 (radical curing aid), 38 parts by weight of Compound 3 (second acrylic compound), 5 parts by weight of Compound 4 (third acrylic compound) and 3 parts by weight of Compound 8 (first acrylic compound). The first acrylic compound content in Test Example 6 was 6 mass%. The polyethylene oxide chain content in Test Example 6 was 9 mass%. The second acrylic compound content in Test Example 6 was 79 mass%. The third acrylic compound content in Test Example 6 was 10 mass%.

The ionizing radiation-curable composition of Test Example 7 was a mixture of 2 parts by weight of Compound 1 (radical curing aid), 3 parts by weight of Compound 2 (third acrylic compound), 36 parts by weight of Compound 3 (second acrylic compound) and 7 parts by weight of Compound 9 (first acrylic compound). The first acrylic compound content in Test Example 7 was 15 mass%. The polyethylene oxide chain content in Test Example 7 was 5 mass%. The second acrylic compound content in Test Example 7 was 75 mass%. The third acrylic compound content in Test Example 7 was 6 mass%.

The ionizing radiation-curable composition of Test Example 8 was a mixture of 2 parts by weight of Compound 1 (radical curing aid), 28 parts by weight of Compound 3 (second acrylic compound), 8 parts by weight of Compound 5 (third acrylic compound) and 10 parts by weight of Compound 6 (first acrylic compound). The first acrylic compound content in Test Example 8 was 21 mass%. The polyethylene oxide chain content in Test Example 8 was 13 mass%. The second acrylic compound content in Test Example 8 was 58 mass%. The third acrylic compound content in Test Example 8 was 17 mass%.

The ionizing radiation-curable composition of Test Example 9 was a mixture of 2 parts by weight of Compound 1 (radical curing aid), 36 parts by weight of Compound 3 (second acrylic compound) and 10 parts by weight of Compound 7 (first acrylic compound). The first acrylic compound content in Test Example 9 was 21 mass%. The polyethylene oxide chain content in Test Example 9 was 0 mass%. The second acrylic compound content in Test Example 9 was 75 mass%. The third acrylic compound content in Test Example 9 was 0 mass%.

As shown in Fig. 4, the ionizing radiation-curable composition of Test Example 11 was a mixture of 2 parts by weight of Compound 1 (radical curing aid), 43 parts by weight of Compound 3 (second acrylic compound) and 3 parts by weight of Compound 4 (third acrylic compound). The first acrylic compound content in Test Example 11 was 0 mass%. The polyethylene oxide chain content in Test Example 11 was 5 mass%. The second acrylic compound content in Test Example 11 was 90 mass%. The third acrylic compound content in Test Example 11 was 6 mass%.

The ionizing radiation-curable composition of Test Example 12 was a mixture of 2 parts by weight of Compound 1 (radical curing aid), 36 parts by weight of Compound 3 (second acrylic compound) and 10 parts by weight of Compound 4 (third acrylic compound). The first acrylic compound content in Test Example 12 was 0 mass%. The polyethylene oxide chain content in Test Example 12 was 16 mass%. The second acrylic compound content in Test Example 12 was 75 mass%. The third acrylic compound content in Test Example 12 was 21 mass%.

The ionizing radiation-curable composition of Test Example 13 was a mixture of 2 parts by weight of Compound 1 (radical curing aid), 26 parts by weight of Compound 3 (second acrylic compound) and 20 parts by weight of Compound 4 (third acrylic compound). The first acrylic compound content in Test Example 13 was 0 mass%. The polyethylene oxide chain content in Test Example 13 was 31 mass%. The second acrylic compound content in Test Example 13 was 54 mass%. The third acrylic compound content in Test Example 13 was 42 mass%.

The ionizing radiation-curable composition of Test Example 14 was a mixture of 2 parts by weight of Compound 1 (radical curing aid), 3 parts by weight of Compound 2 (third acrylic compound), 35.75 parts by weight of Compound 3 (second acrylic compound) and 7 parts by weight of Compound 9 (first acrylic compound). The light control coating liquid of Test Example 14 contained 0.25 parts by weight of the viscosity reducing agent in the light control coating liquid. The first acrylic compound content in Test Example 14 was 15 mass%. The polyethylene oxide chain content in Test Example 14 was 5 mass%. The second acrylic compound content in Test Example 14 was 75 mass%. The third acrylic compound content in Test Example 14 was 6 mass%. The viscosity reducing agent content in the liquid crystal composition 31LC of Test Example 14 was 0.5 mass%.

The ionizing radiation-curable composition of Test Example 15 was a mixture of 2 parts by weight of Compound 1 (radical curing aid), 3 parts by weight of Compound 2 (third acrylic compound), 35.5 parts by weight of Compound 3 (second acrylic compound) and 7 parts by weight of Compound 9 (first acrylic compound). The light control coating liquid of Test Example 15 contained 0.5 parts by weight of the viscosity reducing agent in the light control coating liquid. The first acrylic compound content in Test Example 15 was 15 mass%. The polyethylene oxide chain content in Test Example 15 was 5 mass%. The second acrylic compound content in Test Example 15 was 75 mass%. The third acrylic compound content in Test Example 15 was 6 mass%. The viscosity reducing agent content in the liquid crystal composition 31LC of Test Example 15 was 1.0 mass%.

The ionizing radiation-curable composition of Test Example 16 was a mixture of 2 parts by weight of Compound 1 (radical curing aid), 3 parts by weight of Compound 2 (third acrylic compound), 35.25 parts by weight of Compound 3 (second acrylic compound) and 7 parts by weight of Compound 9 (first acrylic compound). The light control coating liquid of Test Example 16 contained 0.75 parts by weight of the viscosity reducing agent in the light control coating liquid. The first acrylic compound content in Test Example 16 was 15 mass%. The polyethylene oxide chain content in Test Example 16 was 5 mass%. The second acrylic compound content in Test Example 16 was 75 mass%. The third acrylic compound content in Test Example 16 was 6 mass%. The viscosity reducing agent content in the liquid crystal composition 31LC of Test Example 16 was 1.5 mass%.

The ionizing radiation-curable composition of Test Example 17 was a mixture of 2 parts by weight of Compound 1 (radical curing aid), 3 parts by weight of Compound 2 (third acrylic compound), 35.0 parts by weight of Compound 3 (second acrylic compound) and 7 parts by weight of Compound 9 (first acrylic compound). The light control coating liquid of Test Example 17 contained 1 part by weight of the viscosity reducing agent. The first acrylic compound content in Test Example 17 was 15 mass%. The polyethylene oxide chain content in Test Example 17 was 5 mass%. The second acrylic compound content in Test Example 17 was 75 mass%. The third acrylic compound content in Test Example 17 was 6 mass%. The viscosity reducing agent content in the liquid crystal composition 31LC of Test Example 17 was 2.0 mass%.

### [Evaluation Method]

### (i) Responsiveness Evaluation

The light control sheets 11 of the respective test examples were placed in a room temperature environment where the temperature was 23°C. A 100V AC signal was supplied to each of the light control sheets 11 of the test examples, and it was confirmed that the light control sheets 11 of the test examples changed from transparent to opaque. Then, the supply of the AC signal was stopped, and it was confirmed that the light control sheets 11 changed from opaque to transparent. The haze was measured by a method in accordance with JIS K 7136:2000, and the time taken for the haze of the light control sheet 11 to stabilize after the AC signal supply was stopped was measured as the response in a room temperature environment.

The light control sheets 11 of the respective test examples were placed in a low-temperature environment where the temperature was -23°C. A 100V AC signal was supplied to each of the light control sheets 11 of the test examples, and it was confirmed that the light control sheets 11 of the test examples changed from transparent to opaque. Then, the supply of the AC signal was stopped, and it was confirmed that the light control sheets 11 changed from opaque to transparent. Similarly to the responsiveness evaluation in a room temperature environment, the time taken for the haze of the light control sheet 11 to stabilize after the AC signal supply was stopped was measured as the response in a low-temperature environment.

### (ii) Peel Strength Evaluation

A strip-shaped test piece having 25 mm width was cut out from each of the light control sheets 11 of the test examples, and the peel strength at the peel angle of 180° before heat treatment was measured using a method in accordance with JIS Z-0237:2009. In this measurement, with the first transparent support layer 36 of the test piece being fixed to a test plate, the second transparent support layer 37 of the test piece was peeled off at the angle of 180° relative to the test plate.

### (iii) Haze Evaluation After Heat Treatment

Each of the light control sheets 11 of the test examples was placed in an oven at 130°C for 30 minutes to apply heat treatment to the light control sheets 11 of the test examples. Next, a 100V AC signal was supplied to each of the light control sheets 11 of the test examples, and the haze in the transparent state after the heat treatment was measured.

### [Evaluation Results]

### (i) Responsiveness

As shown in Fig. 3, the light control sheets 11 of Test Examples 1 to 9 were found to have a response time of 1 second in a room temperature environment. The light control sheets 11 of Test Examples 1 to 9 were found to have a response time of 1 second or more and 2 seconds or less in a low-temperature environment.

As shown in Fig. 4, the light control sheets 11 of Test Examples 11 to 13 were found to have a response time of 1 second in a room temperature environment. On the other hand, the light control sheets 11 of Test Examples 11 to 13 were found to have a response time of 8 second or more and 10 seconds or less in a low-temperature environment, which was significantly longer than the response time in a room temperature environment. Further, the light control sheets 11 of Test Examples 14 to 17, in which a viscosity reducing agent was added, were found to have the response time of 1 second in a room temperature environment. The light control sheets 11 of Test Examples 14 to 17 were found to have a response time of 1 second in a room temperature environment, which was equal to the response time in a room temperature environment.

From a comparison between Test Example 5 and Test Examples 11 to 13, the first acrylic compound content being 2 mass% or greater, that is, satisfying the lower limit of [Condition 1] reduces the response time in a low-temperature environment. From a comparison between Test Example 1 to 5 and Test Examples 11 to 13, satisfying the first acrylic compound content of 2 mass% or greater and 52 mass% or less substantially stabilizes the response time in a low-temperature environment.

From the tendency of the response time in the light control sheets 11 of Test Examples 11 to 13, increasing the third acrylic compound content gradually reduces the response time in a low-temperature environment. However, from a comparison between Test Example 5 and Test Examples 11 to 13, increasing the first acrylic compound content from 0 mass% to 2 mass% reduces the response time in a low-temperature environment to a greater extent than increasing the third acrylic compound content from 6 mass% to 42 mass% does. From the effect of the first acrylic compound content and a comparison between Test Examples 5 to 8 and Test Example 9, even if the third acrylic compound content is 0 mass%, satisfying the lower limit of [Condition 1] reduces the response time in a low-temperature environment to substantially the same level as that in a room temperature environment.

As shown in Fig. 5, when the first acrylic compound content changes from 0 mass% to 2 mass%, the response time in a low-temperature environment is rapidly reduced. Further, when the first acrylic compound content is in the range of 2 mass% or greater and 52 mass% or less, the response time in a low-temperature environment is stabilized to substantially the same level as that in a room temperature environment. Thus, the light control sheet 11 satisfying the lower limit of [Condition 1] makes the cured product of the ionizing radiation-curable composition dense in the phase separation process of the light control layer 31 and prevents low molecular weight compounds from remaining in the liquid crystal composition 31LC. Accordingly, the response time in a low-temperature environment is reduced to substantially the same level as that in a room temperature environment.

### (ii) Peel Strength

Returning to Fig. 3, the light control sheets 11 of Test Examples 1, 2, 5 to 8 were found to have a peel strength of 0.20 N/25 mm or greater. The light control sheets 11 of Test Examples 3 and 9 were found to have a peel strength of 0.10 N or greater. On the other hand, the light control sheet 11 of Test Example 4 was found to have a peel strength of less than 0.10 N/25 mm.

As shown in Fig. 4, the light control sheets 11 of Test Examples 11 and 12 were found to have a peel strength of 0.10 N/25 mm or greater. On the other hand, the light control sheet 11 of Test Example 13 was found to have the peel strength of less than 0.10 N/25 mm. The light control sheets 11 of Test Examples 14 and 15, in which a viscosity reducing agent was added, were found to have a peel strength of 0.10 N/25 mm or greater. On the other hand, the light control sheets 11 of Test Examples 16 and 17 were found to have a peel strength of less than 0.10 N/25 mm.

From a comparison between Test Example 3 and Test Example 4, decreasing the first acrylic compound content from 52 mass% to 48 mass% increases the peel strength to 0.10 N/25 mm or greater. From a comparison between Test Example 2 and Test Example 3, decreasing the first acrylic compound content from 48 mass% to 29 mass% increases the peel strength steeply.

From a comparison between Test Example 7 and Test Example 9, increasing the third acrylic compound content to 5 mass% or greater also increases the peel strength steeply. Further, from a comparison between Test Example 7 and Test Example 9, the polyethylene oxide chain content of 2 mass% or greater and 20 mass% or less, that is, satisfying [Condition 6] also increases the peel strength steeply.

Thus, from a comparison between Test Examples 1, 2 and 5 and Test Examples 3 and 4, and a comparison between Test Examples 7 and 8 and Test Example 9, the first acrylic compound content of 50 mass% or less and the third acrylic compound content of 5 mass% or greater and 20 mass% or less increase the peel strength. Furthermore, the first acrylic compound content of 40 mass% or less and the third acrylic compound content of 5 mass% or greater and 20 mass% or less further increase the peel strength. Furthermore, the first acrylic compound content of 30 mass% or less and the third acrylic compound content of 5 mass% or greater and 20 mass% or less even further increases the peel strength.

That is, the first acrylic compound content satisfying the upper limit of [Condition 1] and the third acrylic compound content satisfying [Condition 3] increases the peel strength. From the evaluation results of Test Examples 1 to 3, 5, 7 and 8, the second acrylic compound content of 35 mass% or greater and 85 mass% or less, that is, satisfying [Condition 2] increases the effectiveness of improving the peel strength.

Further, the first acrylic compound content satisfying the upper limit of [Condition 1A] and the third acrylic compound content satisfying [Condition 3] further increases the peel strength. From the evaluation results of Test Examples 1, 2, 5, 7 and 8, the second acrylic compound content of 45 mass% or greater and 85 mass% or less, that is, satisfying [Condition 2A] increases the effectiveness of improving the peel strength.

Further, the first acrylic compound content satisfying the upper limit of [Condition 1B] and the third acrylic compound content satisfying [Condition 3] even further increases the peel strength. From the evaluation results of Test Examples 1, 2, 5, 7 and 8, the second acrylic compound content of 55 mass% or greater and 85 mass% or less, that is, satisfying [Condition 2B] increases the effectiveness of improving the peel strength.

In addition, from the results of the peel strength of Test Examples 1, 2, 5 and 6, the first acrylic compound with 3 or more and 5 or less functional groups and the first acrylic compound content of 30 mass% or less, that is, satisfying [Condition 5] increases the effectiveness of improving the peel strength of 0.2 N/25 mm or greater.

From the tendency of the peel strength in the light control sheets 11 of Test Examples 11 to 13, increasing the third acrylic compound content to more than 20 mass% decreases the peel strength. From a comparison between Test Example 7 and Test Example 14, decreasing the viscosity reducing agent content to less than 0.25 mass% increases the peel strength steeply. From a comparison between Test Example 7 and Test Example 14, the viscosity reducing agent content of 0.13 mass% or less stabilizes the peel strength to a high level. The liquid crystal composition 31LC containing no viscosity reducing agent further stabilizes the peel strength to a higher level. From the tendency of the peel strength in the light control sheets 11 of Test Examples 14 to 17, increasing the viscosity reducing agent content from 0.25 mass% further decreases the peel strength. Thus, when high peel strength is required, the viscosity reducing agent is preferably 0.50 mass% or less, more preferably 0.25 mass% or less, and still more preferably, no viscosity reducing agent is contained in the liquid crystal composition 31LC.

As shown in Fig. 6, in the range where the third acrylic compound content is 5 mass% or greater and 20 mass% or less, decreasing the first acrylic compound content from 50 mass% increases the peel strength steeply. Further, in the range where the first acrylic compound content is 40 mass% or less, the peel strength is stable at a high level of 0.2 N/25 mm or greater. Thus, the light control sheet 11 satisfying [Condition 1] to [Condition 3] prevents an excessive increase in the rigidity due to densification of the cured product of the ionizing radiation-curable composition, and steeply increases the peel strength to 0.10 N/25 mm or greater. Further, the light control sheet 11 satisfying [Condition 1A], [Condition 2A] and [Condition 3] stabilizes the peel strength at a high level of 0.20 N/25 mm or greater.

As shown in Fig. 7, when the acrylic compounding ratio increases from 0 to 0.25, the peel strength increases steeply. Further, in the range where the acrylic compounding ratio is 0.25 or greater, the peel strength is stable at a high level of 0.20 N/25 mm or greater. Thus, the light control sheet 11 satisfying [Condition 1], [Condition 2] and [Condition 4] also prevents an excessive increase in the rigidity due to densification of the cured product of the ionizing radiation-curable composition, and stabilizes the peel strength at a high level of 0.20 N/25 mm or greater.

### (iii) Haze After Heat Treatment

Returning to Fig. 3, the light control sheets 11 of Test Examples 1 to 9 were found to have low haze of 5% or less when they were transparent before the heat treatment.

The light control sheets 11 of Test Examples 1 to 4 and 6 to 9 were found to have low haze of 10% or less when they were transparent after the heat treatment. The light control sheets 11 of Test Examples 3, 4, 8 and 9 were found to have lower haze of 6% or less when they were transparent after the heat treatment. The light control sheets 11 of Test Examples 1 to 4 and 6 to 9 were found to have a small increase in haze of 5% or less.

On the other hand, the light control sheet 11 of Test Example 5 was found to have high haze of 14% when it was transparent after the heat treatment. The light control sheet 11 of Test Example 5 was found to have a 9% increase in haze due to the heat treatment.

Returning to Fig. 4, the light control sheets 11 of Test Examples 11 to 13 were found to have low haze of 4% or less when they were transparent before the heat treatment. On the other hand, the light control sheets 11 of Test Examples 11 to 13 were found to have high haze of 11% or greater when they were transparent after the heat treatment. The light control sheets 11 of Test Examples 11 to 13 were found to have an increase in haze of 7% or greater due to the heat treatment. The light control sheets 11 of Test Examples 14 to 17 were found to have low haze of 5% or less when they were transparent before the heat treatment. The light control sheets 11 of Test Examples 14 to 17 were found to have low haze of 10% or greater when they were transparent after the heat treatment.

From a comparison between Test Example 6 and Test Examples 5 and 11, increasing the first acrylic compound content from 0 mass% to 5 mass% or greater suppresses a sharp increase in haze after the heat treatment.

From a comparison between Test Examples 1 to 4 and 6 and Test Example 5, the first acrylic compound content of 5 mass% or greater and 50 mass% or less stabilizes the suppression of haze increase after the heat treatment.

The second acrylic compound content of 30 mass% or greater and 80 mass% or less increases the effectiveness of suppressing an increase in haze and improving the peel strength. The third acrylic compound content is 5 mass% or greater and 20 mass% or less. In addition, from a comparison between Test Examples 6 to 8 and Test Example 9, the polyethylene oxide chain content of 2 mass% or greater and 20 mass% or less, that is, satisfying [Condition 6] increases the peel strength to 0.11 N/25 mm or greater.

From a comparison between Test Examples 1 to 3 and 6 and Test Examples 4 and 5, the first acrylic compound content of 5 mass% or greater and 40 mass% or less suppresses the haze increase after the heat treatment and increases the peel strength to 0.10 N/25 mm or greater. The second acrylic compound content of 40 mass% or greater and 80 mass% or less increases the effectiveness of suppressing an increase in haze and improving the peel strength. The third acrylic compound content is 5 mass% or greater and 20 mass% or less. The polyethylene oxide chain content may be 2 mass% or greater and 20 mass% or less.

From a comparison between Test Examples 1, 2 and 6 and Test Examples 3 to 5, the first acrylic compound content of 5 mass% or greater and 30 mass% or less suppresses the haze increase after the heat treatment and further increases the peel strength to 0.20 N/25 mm or greater. That is, satisfying [Condition 5], where the first acrylic compound has 3 or more and 5 or less functional groups and the content of 30 mass% or less, provides the light control sheet 11 with very good heat resistance and peel strength. The second acrylic compound content of 50 mass% or greater and 80 mass% or less further increases the effectiveness of suppressing an increase in haze and improving the peel strength. The third acrylic compound content is 5 mass% or greater and 20 mass% or less. The polyethylene oxide chain content may be 2 mass% or greater and 20 mass% or less.

From the tendency of the haze after the heat treatment in the light control sheets 11 of Test Examples 11 to 13, increasing the third acrylic compound content gradually reduces the haze after the heat treatment. However, from a comparison between Test Example 6 and Test Example 11, increasing the first acrylic compound content from 0 mass% to 6 mass% effectively reduces the haze after the heat treatment to the same extent as with increasing the third acrylic compound content from 6 mass% to 42 mass%.

From a comparison between Test Example 7 and Test Examples 14 to 17, changing the viscosity reducing agent content within the range from 0 mass% to 1 mass% suppresses the increase in haze after the heat treatment to the same degree. When it is required for the light control sheet 11 to have improved responsiveness in a low-temperature environment, improved peel strength and low haze after the heat treatment, the viscosity reducing agent content is preferably 0.50 mass% or less. Further, when it is required to have improved responsiveness in a low-temperature environment, high and stable peel strength and low haze after the heat treatment, the viscosity reducing agent content is preferably less than 0.25 mass%, and more preferably 0.13 mass% or less.

The decrease in peel strength due to containing a viscosity reducing agent may also be suppressed by satisfying [Condition 1A], [Condition 2A] and [Condition 3] and having the first acrylic compound content of 5 mass% or greater. Further, the decrease in peel strength due to containing a viscosity reducing agent may also be suppressed by satisfying [Condition 1B], [Condition 2B] and [Condition 3] and having the first acrylic compound content of 5 mass% or greater.

On the other hand, when [Condition 1] to [Condition 3] are satisfied, and at least one of [Condition 1B] and [Condition 2B] is not satisfied, and high and stable peel strength is required, it is preferred that no viscosity reducing agent is contained in the liquid crystal composition 31LC. When [Condition 1], [Condition 2] and [Condition 4] are satisfied, and at least one of [Condition 1B] and [Condition 2B] is not satisfied, and high and stable peel strength is required, it is also preferred that no viscosity reducing agent is contained in the liquid crystal composition 31LC.

As shown in Fig. 8, when the first acrylic compound content changes from 0 mass% to 5 mass%, an increase in haze after the heat treatment is rapidly suppressed. Further, when the first acrylic compound content is 5 mass% or greater, the change in haze relative to the change in the first acrylic compound content is gradual. Thus, a first acrylic compound content of 5 mass% or greater provides the light control sheet 11 with high and stable heat resistance.

As shown in Fig. 9, when the acrylic compounding ratio increases from 0 to 5, the haze after the heat treatment gradually increases from 5% to 14%. When the acrylic compounding ratio is in the range of 0.25 or greater and 2.0 or less, the haze after the heat treatment remains in the range of 5% or greater and 9% or less. Thus, satisfying [Condition 1], [Condition 2] and [Condition 4A] provides the light control sheet 11 with good haze after the heat treatment.

In Fig. 10, the open circles indicate the levels at which (i) the response in a low-temperature environment is 2 seconds or less, (ii) the peel strength is 0.2 N/25 mm or greater, and (iii) the haze after the heat treatment is 9% or less. That is, the open circles in Fig. 10 indicate Test Examples 1, 2 and 6 to 8, which are the levels at which good response in a low-temperature environment, good peel strength, and good transparency when heating is included in the manufacturing, mounting, and the like are obtained.

In Fig. 10, the filled triangles indicate the levels at which (i) the response in a low-temperature environment is 2 seconds or less, (ii) the peel strength is less than 0.2 N/25 mm, and (iii) the haze after the heat treatment is 9% or less. That is, the filled triangles in Fig. 10 indicate Test Examples 3, 4 and 9, which are the levels at which good response in a low-temperature environment is obtained and good transparency is obtained when heating is included in the manufacturing, mounting, and the like, but good peel strength is not obtained.

In Fig. 10, the open square indicates the level at which (i) the response in a low-temperature environment is 2 seconds or less, (ii) the peel strength is 0.2 N/25 mm or greater, and (iii) the haze after the heat treatment is 10% or greater. That is, the open square in Fig. 10 indicates Test Example 5, which is the level at which good response in a low-temperature environment and good peel strength are obtained, but good transparency is not obtained when heating is included in the manufacturing, mounting, and the like.

In Fig. 10, the filled circle indicates the level at which (i) the response in a low-temperature environment is 10 seconds, (ii) the peel strength is 0.2 N/25 mm or greater, and (iii) the haze after the heat treatment is 10% or greater. That is, the filled circle in Fig. 10 indicates Test Example 11, which is the level at which good peel strength is obtained, but good response in a low-temperature environment is not obtained and good transparency is not obtained when heating is included in the manufacturing, mounting, and the like.

In Fig. 10, the filled diamonds indicate the levels at which (i) the response in a low-temperature environment is 8 seconds or 9 seconds, (ii) the peel strength is less than 0.2 N/25 mm, and (iii) the haze after the heat treatment is 10% or greater. That is, the filled diamonds in Fig. 10 indicate Test Examples 12 and 13, which are the levels at which good response in a low-temperature environment is not obtained, good peel strength is not obtained, and good transparency is not obtained when heating is included in the manufacturing, mounting, and the like.

As shown in Fig. 10, by comparing the open circles and the open square with the filled circle and the filled diamonds, good responsiveness is obtained in a low-temperature environment when the first acrylic compound content is 2 mass% or greater. By comparing the open square, the filled circle and the filled diamonds with the open circles, good responsiveness is obtained in a low-temperature environment and good haze is obtained in the transparent state after the heat treatment when the first acrylic compound content is 5 mass% or greater. By comparing the filled circle, diamonds and triangles with the open circles and square, good responsiveness is obtained in a low-temperature environment and good peel strength is obtained when Conditions 1A, 2A and 3 are satisfied, or when Conditions 1A, 2A and 3 are satisfied.

### [First Alignment Layer 32, Second Alignment Layer 33 and Viscosity Reducing Agent]

A mounting technique of the light control sheet 11 described above requires the light control sheet 11 to be heat resistant. In the interlayer film type mounting technique, glass substrates with the light control sheet 11 sandwiched therebetween are heated for bonding. The films sandwiching the light control layer 31 generate low molecular weight impurities in a high-temperature environment such as during bonding. Since the low molecular weight impurities diffused into the light control layer 31 degrade the electric properties of the liquid crystal compound LCM, a surface treatment layer of the films sandwiching the light control layer 31 has a barrier function so that the low molecular weight impurities are prevented from contacting the liquid crystal compound LCM.

The use of flexible substrates such as the first transparent support layer 36 and the second transparent support layer 37 enables roll-to roll production of the light control sheet 11. On the other hand, the use of substrates that are easily deformed in a high-temperature environment limits the conditions for forming the light control sheet 11 to a low-temperature environment, avoiding a high-temperature environment. When the alignment of the liquid crystal compound LCM is required during the period when the voltage signal supply is stopped, such as in the reverse type light control sheet 11, the light control sheet 11 includes the first alignment layer 32 and the second alignment layer 33. The first alignment layer 32 and the second alignment layer 33 that apply an alignment regulation force to the liquid crystal compound LCM are disposed in contact with the light control layer 31, regardless of whether the surface treatment layer described above is provided.

The first alignment layer 32 and the second alignment layer 33, whose formation conditions are limited to a low-temperature environment, contain unreacted substances such as polyamic acid and low molecular weight impurities such as residual solvents. In the mounting technique of the light control sheet 11 which requires heating, by-products generated from the unreacted substances and the residual solvents diffuse into the light control layer 31 from the first alignment layer 32 and the second alignment layer 33, which are disposed in contact with the light control layer 31. The low molecular weight impurities such as unreacted substances that diffuse into the light control layer 31 weaken the alignment regulation force exerted by the first alignment layer 32 and the second alignment layer 33 through the ionizing radiation-curable resin layer 31P, increasing the haze of the light control sheet 11 in the transparent state. In this regard, the configuration in which the cured product of the ionizing radiation-curable composition is made dense in the phase separation process between the cured product of the ionizing radiation-curable composition and the liquid crystal composition 31LC includes a configuration in which the low molecular weight impurities are prevented from diffusing into the liquid crystal composition 31LC through the ionizing radiation-curable resin layer 31P.

The degree to which the viscosity reducing agents such as adipic acid esters and phosphate esters increase the viscosity with a decrease in temperature is smaller than the degree to which the liquid crystal compound LCM increases the viscosity with a decrease in temperature in a low-temperature environment such as cold regions. On the other hand, the viscosity reducing agent in the liquid crystal composition 31LC, when reaching the interface between the light control layer 31 and other layers, reduces the peel strength of the light control layer 31 to other layers. Densifying the cured product of the ionizing radiation-curable composition during the phase separation process between the cured product of the ionizing radiation-curable composition and the liquid crystal composition 31LC prevents low molecular weight compounds from remaining in the liquid crystal composition 31LC. Further, the configuration in which the cured product of the ionizing radiation-curable composition is made dense to the extent that the low molecular weight compounds do not reduce the peel strength includes a configuration in which the viscosity reducing agent is prevented from diffusing into the interface between the light control layer 31 and other layers.

According to the above embodiments, the advantageous effects listed below can be obtained.
(1) The ionizing radiation-curable resin layer 31P that satisfies Conditions 1, 2 and 3 or satisfies Conditions 1, 2 and 4 increases the density of the cured product of the ionizing radiation-curable composition in the phase separation process of the light control layer 31 while preventing low molecular weight compounds from remaining in the liquid crystal composition 31LC. As a result, the ionizing radiation-curable resin layer 31P increases the responsiveness in a low-temperature environment.
(2) The ionizing radiation-curable resin layer 31P that satisfies Conditions 1A, 2A and 3 or satisfies Conditions 1A, 2A and 4 increases the peel strength in the light control sheet 11 while preventing low molecular weight compounds from reaching the liquid crystal compound LCM.
(3) The ionizing radiation-curable resin layer 31P that satisfies Conditions 1B, 2B and 3 or satisfies Conditions 1B, 2B and 4 significantly increases the peel strength in the light control sheet 11 while preventing the low molecular weight compounds from reaching the liquid crystal compound LCM.
(4) The first acrylic compound content may be 5 mass% or greater and 50 mass% or less, the second acrylic compound content may be 30 mass% or greater and 80 mass% or less, and the third acrylic compound content may be 5 mass% or greater and 20 mass% or less. With this configuration, the ionizing radiation-curable resin layer 31P prevents low molecular weight impurities contained in the first alignment layer 32 and the second alignment layer 33 from reaching the liquid crystal compound LCM. As a result, the heat resistance of the optical properties of the light control sheet 11 is improved.
(5) The first acrylic compound content may be 5 mass% or greater and 40 mass% or less, the second acrylic compound content may be 40 mass% or greater and 80 mass% or less, and the third acrylic compound content may be 5 mass% or greater and 20 mass% or less. Further, the acrylic compounding ratio may be 0.25 or greater and 2.0 or less. As a result, in addition to the effect similar to the above (1), the ionizing radiation-curable resin layer 31P increases the peel strength in the light control sheet 11 while increasing the heat resistance of the optical properties of the light control sheet 11.
(6) The first acrylic compound content may be 5 mass% or greater and 30 mass% or less, the second acrylic compound content may be 50 mass% or greater and 80 mass% or less, and the third acrylic compound content may be 5 mass% or greater and 20 mass% or less. Further, the acrylic compounding ratio may be 0.25 or greater and 2.0 or less. As a result, in addition to the effect similar to the above (2), the ionizing radiation-curable resin layer 31P significantly increases the peel strength in the light control sheet 11 while increasing the heat resistance of the optical properties of the light control sheet 11.
(7) In addition to the above (4) to (6), when the light control sheet 11 includes the first alignment layer 32 and the second alignment layer 33, it is possible to provide a reverse type light control sheet 11 with improved responsiveness in a low-temperature environment.
(8) The ionizing radiation-curable resin layer 31P may satisfy Conditions 1A, 2A and 3 or may satisfy Conditions 1A, 2A and 4, and the liquid crystal composition 31LC may contain a viscosity reducing agent of 0.25 mass% or less. As a result, the light control sheet 11 increases the effectiveness of improving the responsiveness in a low-temperature environment and suppresses a decrease in peel strength.
(9) The ionizing radiation-curable resin layer 31P may satisfy Conditions 1B, 2B and 3 or may satisfy Conditions 1B, 2B and 4, and the liquid crystal composition 31LC may not necessarily contain a viscosity reducing agent. As a result, the light control sheet 11 increases the effectiveness of improving the responsiveness in a low-temperature environment and significantly suppresses a decrease in peel strength.

### [Reference Signs List]

- LCM: Liquid crystal compound
- 10: Light control device
- 11: Light control sheet
- 12: Driving unit
- 31: Light control layer
- 31P: Ionizing radiation-curable resin layer
- 31LC: Liquid crystal composition
- 31D: Void
- 32: First alignment layer
- 33: Second alignment layer
- 34: First transparent electrode layer
- 35: Second transparent electrode layer
- 36: First transparent support layer
- 37: Second transparent support layer

## Claims

1. A light control sheet comprising:
a first transparent electrode layer;
a second transparent electrode layer; and
a light control layer located between the first transparent electrode layer and the second transparent electrode layer, the light control sheet being configured to change haze of the light control layer in response to a change in voltage applied between the first transparent electrode layer and the second transparent electrode layer, wherein
the light control layer includes an ionizing radiation-curable resin layer that defines voids and a liquid crystal composition filled in the voids,
an acryloyl group and a methacryloyl group are functional groups,
an acrylic compound having 3 or more of the functional groups and having a double bond equivalent weight of 150 g/eq or less, among acrylic compounds constituting the ionizing radiation-curable resin layer, is a first acrylic compound, and
a content of the first acrylic compound constituting the ionizing radiation-curable resin layer is 2 mass% or greater of the ionizing radiation-curable resin layer.

2. The light control sheet according to claim 1, wherein
an acrylic compound having 1 or more and 3 or less of the functional groups and a polyethylene oxide chain and having a double bond equivalent weight of 300 g/eq or greater and 700 g/eq or less, among acrylic compounds constituting the ionizing radiation-curable resin layer, is a third acrylic compound, and
a content of the third acrylic compound constituting the ionizing radiation-curable resin layer is 5 mass% or greater and 20 mass% or less of the ionizing radiation-curable resin layer.

3. The light control sheet according to claim 2, comprising:
a first alignment layer sandwiched between the first transparent electrode layer and the light control layer; and
a second alignment layer sandwiched between the second transparent electrode layer and the light control layer, wherein
a second acrylic compound includes a monofunctional alkyl acrylate containing a saturated alkyl group having 2 or more and 12 or fewer carbon atoms, a monofunctional alkoxyalkyl acrylate containing a saturated alkoxyalkyl group having 2 or more and 12 or fewer carbon atoms, a monofunctional alkyl methacrylate containing a saturated alkyl group having 2 or more and 12 or fewer carbon atoms, and a monofunctional alkoxyalkyl methacrylate containing a saturated alkoxyalkyl group having 2 or more and 12 or fewer carbon atoms,
a content of the first acrylic compound constituting the ionizing radiation-curable resin layer is 5 mass% or greater and 40 mass% or less of the ionizing radiation-curable resin layer, and
a content of the second acrylic compound constituting the ionizing radiation-curable resin layer is 55 mass% or greater and 80 mass% or less of the ionizing radiation-curable resin layer.

4. The light control sheet according to claim 2, wherein
a second acrylic compound includes a monofunctional alkyl acrylate containing a saturated alkyl group having 2 or more and 12 or fewer carbon atoms, a monofunctional alkoxyalkyl acrylate containing a saturated alkoxyalkyl group having 2 or more and 12 or fewer carbon atoms, a monofunctional alkyl methacrylate containing a saturated alkyl group having 2 or more and 12 or fewer carbon atoms, and a monofunctional alkoxyalkyl methacrylate containing a saturated alkoxyalkyl group having 2 or more and 12 or fewer carbon atoms,
a content of the first acrylic compound constituting the ionizing radiation-curable resin layer is 2 mass% or greater and 50 mass% or less of the ionizing radiation-curable resin layer, and
a content of the second acrylic compound constituting the ionizing radiation-curable resin layer is 35 mass% or greater and 85 mass% or less of the ionizing radiation-curable resin layer.

5. The light control sheet according to claim 1, wherein
a second acrylic compound includes a monofunctional alkyl acrylate containing a saturated alkyl group having 2 or more and 12 or fewer carbon atoms, a monofunctional alkoxyalkyl acrylate containing a saturated alkoxyalkyl group having 2 or more and 12 or fewer carbon atoms, a monofunctional alkyl methacrylate containing a saturated alkyl group having 2 or more and 12 or fewer carbon atoms, and a monofunctional alkoxyalkyl methacrylate containing a saturated alkoxyalkyl group having 2 or more and 12 or fewer carbon atoms,
an acrylic compound having 1 or more and 3 or less of the functional groups and a polyethylene oxide chain, and having a double bond equivalent weight of 300 g/eq or greater and 700 g/eq or less, among acrylic compounds constituting the ionizing radiation-curable resin layer, is a third acrylic compound,
a content of the first acrylic compound constituting the ionizing radiation-curable resin layer is 2 mass% or greater and 50 mass% or less of the ionizing radiation-curable resin layer,
a content of the second acrylic compound constituting the ionizing radiation-curable resin layer is 35 mass% or greater and 85 mass% or less of the ionizing radiation-curable resin layer, and
a ratio of the content of the third acrylic compound constituting the ionizing radiation-curable resin layer to the content of the first acrylic compound constituting the ionizing radiation-curable resin layer is 0.25 or greater.

6. The light control sheet according to any one of claims 3 to 5, wherein
the number of the functional groups in the first acrylic compound is 3 or more and 5 or less, and
a content of the first acrylic compound constituting the ionizing radiation-curable resin layer is 30 mass% or less of the ionizing radiation-curable resin layer.

7. The light control sheet according to claim 3, wherein
the first alignment layer and the second alignment layer each contain at least one polymer selected from the group consisting of a polyimide precursor and a polyimide.

8. The light control sheet according to claim 4 or 5, wherein
the liquid crystal composition does not contain a viscosity reducing agent.

9. The light control sheet according to any one of claims 3 to 5, wherein
the first acrylic compound is a pentaerythritol compound,
the second acrylic compound is isobornyl acrylate, and
the third acrylic compound is an alkoxypolyethylene glycol compound.

10. The light control sheet according to any one of claims 3 to 5, wherein
the first acrylic compound is a trimethylolpropane compound,
the second acrylic compound is isobornyl acrylate, and
the third acrylic compound is a polyethylene oxide-modified trimethylolpropane compound.

11. The light control sheet according to any one of claims 3 to 5, wherein
a ratio of the weight of the liquid crystal composition to the sum of the weight of the ionizing radiation-curable resin layer and the weight of the liquid crystal composition is 20 mass% or greater and 70 mass% or less.

12. A light control device comprising:
a light control sheet; and
a driving unit that applies a voltage to the light control sheet,
the light control sheet comprising:
a first transparent electrode layer;
a second transparent electrode layer; and
a light control layer located between the first transparent electrode layer and the second transparent electrode layer, the light control sheet being configured to change haze of the light control layer in response to a change in the voltage applied between the first transparent electrode layer and the second transparent electrode layer, wherein
the light control layer includes an ionizing radiation-curable resin layer that defines voids and a liquid crystal composition filled in the voids,
an acryloyl group and a methacryloyl group are functional groups,
an acrylic compound having 3 or more of the functional groups and having a double bond equivalent weight of 150 g/eq or less, among acrylic compounds constituting the ionizing radiation-curable resin layer, is a first acrylic compound, and
a content of the first acrylic compound constituting the ionizing radiation-curable resin layer is 2 mass% or greater of the ionizing radiation-curable resin layer.

13. The light control device according to claim 12, wherein
an acrylic compound having 1 or more and 3 or less of the functional groups and a polyethylene oxide chain, and having a double bond equivalent weight of 300 g/eq or greater and 700 g/eq or less, among acrylic compounds constituting the ionizing radiation-curable resin layer, is a third acrylic compound, and
a content of the third acrylic compound constituting the ionizing radiation-curable resin layer is 5 mass% or greater and 20 mass% or less of the ionizing radiation-curable resin layer.

14. The light control device according to claim 13, wherein
the light control sheet comprises:
a first alignment layer sandwiched between the first transparent electrode layer and the light control layer; and
a second alignment layer sandwiched between the second transparent electrode layer and the light control layer, wherein
a second acrylic compound includes a monofunctional alkyl acrylate containing a saturated alkyl group having 2 or more and 12 or fewer carbon atoms, a monofunctional alkoxyalkyl acrylate containing a saturated alkoxyalkyl group having 2 or more and 12 or fewer carbon atoms, a monofunctional alkyl methacrylate containing a saturated alkyl group having 2 or more and 12 or fewer carbon atoms, and a monofunctional alkoxyalkyl methacrylate containing a saturated alkoxyalkyl group having 2 or more and 12 or fewer carbon atoms,
a content of the first acrylic compound constituting the ionizing radiation-curable resin layer is 5 mass% or greater and 40 mass% or less relative to the ionizing radiation-curable resin layer, and
a content of the second acrylic compound constituting the ionizing radiation-curable resin layer is 55 mass% or greater and 80 mass% or less relative to the ionizing radiation-curable resin layer.

15. The light control device according to claim 13, wherein
a second acrylic compound includes a monofunctional alkyl acrylate containing a saturated alkyl group having 2 or more and 12 or fewer carbon atoms, a monofunctional alkoxyalkyl acrylate containing a saturated alkoxyalkyl group having 2 or more and 12 or fewer carbon atoms, a monofunctional alkyl methacrylate containing a saturated alkyl group having 2 or more and 12 or fewer carbon atoms, and a monofunctional alkoxyalkyl methacrylate containing a saturated alkoxyalkyl group having 2 or more and 12 or fewer carbon atoms,
a content of the first acrylic compound constituting the ionizing radiation-curable resin layer is 2 mass% or greater and 50 mass% or less of the ionizing radiation-curable resin layer, and
a content of the second acrylic compound constituting the ionizing radiation-curable resin layer is 35 mass% or greater and 85 mass% or less of the ionizing radiation-curable resin layer.

16. The light control device according to claim 12, wherein
a second acrylic compound includes a monofunctional alkyl acrylate containing a saturated alkyl group having 2 or more and 12 or fewer carbon atoms, a monofunctional alkoxyalkyl acrylate containing a saturated alkoxyalkyl group having 2 or more and 12 or fewer carbon atoms, a monofunctional alkyl methacrylate containing a saturated alkyl group having 2 or more and 12 or fewer carbon atoms, and a monofunctional alkoxyalkyl methacrylate containing a saturated alkoxyalkyl group having 2 or more and 12 or fewer carbon atoms,
an acrylic compound having 1 or more and 3 or less of the functional groups and a polyethylene oxide chain, and having a double bond equivalent weight of 300 g/eq or greater and 700 g/eq or less, among acrylic compounds constituting the ionizing radiation-curable resin layer, is a third acrylic compound,
a content of the first acrylic compound constituting the ionizing radiation-curable resin layer is 2 mass% or greater and 50 mass% or less of the ionizing radiation-curable resin layer,
a content of the second acrylic compound constituting the ionizing radiation-curable resin layer is 35 mass% or greater and 85 mass% or less of the ionizing radiation-curable resin layer, and
a ratio of the content of the third acrylic compound constituting the ionizing radiation-curable resin layer to the content of the first acrylic compound constituting the ionizing radiation-curable resin layer is 0.25 or greater.

17. A method of producing a light control sheet, the method comprising:
forming a coating layer containing an ionizing radiation-curable composition and a liquid crystal composition between a first transparent electrode layer and a second transparent electrode layer; and
irradiating the coating layer with ionizing radiation to form a light control layer including an ionizing radiation-curable resin layer that defines voids and the liquid crystal composition filled in the voids between the first transparent electrode layer and the second transparent electrode layer, the light control sheet being configured to change haze of the light control layer in response to a change in voltage applied between the first transparent electrode layer and the second transparent electrode layer, wherein
an acryloyl group and a methacryloyl group are functional groups,
an acrylic compound having 3 or more of the functional groups and having a double bond equivalent weight of 150 g/eq or less, among acrylic compounds constituting the ionizing radiation-curable resin layer, is a first acrylic compound, and
a content of the first acrylic compound constituting the ionizing radiation-curable composition is 2 mass% or greater of the ionizing radiation-curable composition.

18. The method of producing a light control sheet according to claim 17, wherein
an acrylic compound having 1 or more and 3 or less of the functional groups and a polyethylene oxide chain, and having a double bond equivalent weight of 300 g/eq or greater and 700 g/eq or less, among acrylic compounds constituting the ionizing radiation-curable resin layer, is a third acrylic compound, and
a content of the third acrylic compound constituting the ionizing radiation-curable resin layer is 5 mass% or greater and 20 mass% or less of the ionizing radiation-curable resin layer.

19. The method of producing a light control sheet according to claim 18, wherein
the light control sheet comprises:
a first alignment layer sandwiched between the first transparent electrode layer and the light control layer; and
a second alignment layer sandwiched between the second transparent electrode layer and the light control layer,
a second acrylic compound includes a monofunctional alkyl acrylate containing a saturated alkyl group having 2 or more and 12 or fewer carbon atoms, a monofunctional alkoxyalkyl acrylate containing a saturated alkoxyalkyl group having 2 or more and 12 or fewer carbon atoms, a monofunctional alkyl methacrylate containing a saturated alkyl group having 2 or more and 12 or fewer carbon atoms, and a monofunctional alkoxyalkyl methacrylate containing a saturated alkoxyalkyl group having 2 or more and 12 or fewer carbon atoms,
a content of the first acrylic compound constituting the ionizing radiation-curable resin layer is 5 mass% or greater and 40 mass% or less of the ionizing radiation-curable resin layer, and
a content of the second acrylic compound constituting the ionizing radiation-curable resin layer is 55 mass% or greater and 80 mass% or less of the ionizing radiation-curable resin layer.

20. The method of producing a light control sheet according to claim 18, wherein
a second acrylic compound includes a monofunctional alkyl acrylate containing a saturated alkyl group having 2 or more and 12 or fewer carbon atoms, a monofunctional alkoxyalkyl acrylate containing a saturated alkoxyalkyl group having 2 or more and 12 or fewer carbon atoms, a monofunctional alkyl methacrylate containing a saturated alkyl group having 2 or more and 12 or fewer carbon atoms, and a monofunctional alkoxyalkyl methacrylate containing a saturated alkoxyalkyl group having 2 or more and 12 or fewer carbon atoms,
a content of the first acrylic compound constituting the ionizing radiation-curable resin layer is 2 mass% or greater and 50 mass% or less of the ionizing radiation-curable resin layer, and
a content of the second acrylic compound constituting the ionizing radiation-curable resin layer is 35 mass% or greater and 85 mass% or less of the ionizing radiation-curable resin layer.

21. The method of producing a light control sheet according to claim 17, wherein
a second acrylic compound includes a monofunctional alkyl acrylate containing a saturated alkyl group having 2 or more and 12 or fewer carbon atoms, a monofunctional alkoxyalkyl acrylate containing a saturated alkoxyalkyl group having 2 or more and 12 or fewer carbon atoms, a monofunctional alkyl methacrylate containing a saturated alkyl group having 2 or more and 12 or fewer carbon atoms, and a monofunctional alkoxyalkyl methacrylate containing a saturated alkoxyalkyl group having 2 or more and 12 or fewer carbon atoms,
an acrylic compound having 1 or more and 3 or less of the functional groups and a polyethylene oxide chain, and having a double bond equivalent weight of 300 g/eq or greater and 700 g/eq or less, among acrylic compounds constituting the ionizing radiation-curable resin layer, is a third acrylic compound,
a content of the first acrylic compound constituting the ionizing radiation-curable resin layer is 2 mass% or greater and 50 mass% or less of the ionizing radiation-curable resin layer,
a content of the second acrylic compound constituting the ionizing radiation-curable resin layer is 35 mass% or greater and 85 mass% or less of the ionizing radiation-curable resin layer, and
a ratio of the content of the third acrylic compound constituting the ionizing radiation-curable resin layer to the content of the first acrylic compound constituting the ionizing radiation-curable resin layer is 0.25 or greater.
